(19) **Europäisches Patentamt / European Patent Office / Office européen des brevets**

(11) **EP 3 396 500 A1**

(12) **EUROPEAN PATENT APPLICATION**
published in accordance with Art. 153(4) EPC

(43) Date of publication:
**31.10.2018 Bulletin 2018/44**

(51) Int Cl.:
**G06F 3/041** (2006.01)   **G06F 3/044** (2006.01)

(21) Application number: **16878882.6**

(22) Date of filing: **22.12.2016**

(86) International application number:
**PCT/JP2016/088328**

(87) International publication number:
**WO 2017/110995 (29.06.2017 Gazette 2017/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.12.2015 JP 2015253194**

(71) Applicant: Fujikura Ltd.
**Tokyo 135-8512 (JP)**

(72) Inventors:
• SHIOJIRI, Takeshi
 Sakura-shi
 Chiba 285-8550 (JP)
• OGURA, Shingo
 Sakura-shi
 Chiba 285-8550 (JP)

(74) Representative: **Ter Meer Steinmeister & Partner Patentanwälte mbB**
**Artur-Ladebeck-Strasse 51**
**33617 Bielefeld (DE)**

(54) **WIRING BODY, WIRING SUBSTRATE, AND TOUCH SENSOR**

(57)     A first wiring body (3) includes: a first lead wire (42) that is connected to a first electrode (411); and a second lead wire (43) that is connected to a second electrode (412), in which the first lead wire includes: a first connection portion (421) that is connected to the first electrode; and a first linear portion (422) that has a first end portion (422a) connected to the first connection portion and that is bent from the first connection portion and extends in a first direction, in which the second lead wire includes: a second connection portion (431) that is connected to the second electrode; and a second linear portion (432) that has a second end portion (432a) connected to the second connection portion and that is bent from the second connection portion and extends adjacent to the first linear portion, in which the first linear portion includes: a first portion (422b) that is located on a side of the first end portion with respect to the second end portion in the first direction; and a second portion (422c) that is located on a side opposite to the first end portion with respect to the second end portion in the first direction, and in which the following Formulas (1) and (2) are satisfied.

$$W_1 > W_2 \ldots (1)$$

$$A_1 > A_2 \ldots (2)$$

Herein, in the above Formula (1), $W_1$ is a width of the first linear portion in the first portion, and $W_2$ is a width of the first linear portion in the second portion, and in the above Formula (2), $A_1$ is an opening ratio of the first linear portion in the first portion, and $A_2$ is an opening ratio of the first linear portion in the second portion.

EP 3 396 500 A1

FIG. 3

**Description**

TECHNICAL FIELD

The present invention relates to a wiring body, a wiring board, and a touch sensor.

For designated countries that are permitted to be incorporated by reference in the literature, the content described in Japanese Patent Application No. 2015-253194 filed in Japan on December 25, 2015 is incorporated herein by reference and the description of the specification.

BACKGROUND ART

As a metal mesh conductive layer having a transparent electrode and an electrode lead wire, there is disclosed a metal mesh conductive layer where both a transparent electrode and an electrode lead wire are configured as a fine metal mesh (refer to, for example, Patent Documents 1 to 3).

In addition, as an input device formed by extending a plurality of wiring layers in a non-input area located outside an input area, there is disclosed an input device where the wiring width of the wiring extension portion of the wiring layer is formed to be larger as the number of wiring layers arranged side by side is smaller (refer to, for example, Patent Document 4).

CITATION LIST

PATENT DOCUMENT

>    Patent Document 1: JP. 2014-519129 A
>    Patent Document 2: JP 2014-110060 A
>    Patent Document 3: JP 3191884 U
>    Patent Document 4: JP 2012-053924 A

SUMMARY OF THE INVENTION

PROBLEM TO BE SOLVED BY THE INVENTION

In the related art described in Patent Documents 1 to 3, in a touch sensor or the like having a plurality of the metal mesh conductive layers described above, the plurality of electrode lead wires have different lengths according to arrangement of the transparent electrodes to be connected. For this reason, there is a problem in that electrical resistance among the plurality of electrode lead wires becomes irregular, and thus, variation in responsiveness occurs among the plurality of transparent electrodes.

In addition, there is a problem in that, at the time of connecting the touch sensor or the like to the outside, in the case where the plurality of electrode lead wires are provided collectively, there is a problem in that the electrode lead wires infiltrate, so that the adjacent electrode lead wires may be short-circuited.

In the related art described in Patent Document 4, since the wiring width of the wiring extension portion of the wiring layer is formed to be larger as the number of wiring layers arranged side by side is smaller, there is a problem in that, in an area where the wire width of the wiring extension portion of the wiring layer is formed to be large, the durability against bending is deteriorated and the bendability of the wiring layer is deteriorated.

The invention is to provide a wiring body, a wiring board, and a touch sensor capable of suppressing deterioration in bendability of a lead wire while suppressing variation in responsiveness among a plurality of electrodes and capable of suppressing short-circuiting between adjacent lead wires.

MEANS FOR SOLVING PROBLEM

[1] A wiring body according to the invention includes: a first lead wire that is connected to a first electrode; and a second lead wire that is connected to a second electrode, in which the first lead wire includes: a first connection portion that is connected to the first electrode; and a first linear portion that has a first end portion connected to the first connection portion and that is bent from the first connection portion and extends in a first direction, in which the second lead wire includes: a second connection portion that is connected to the second electrode; and a second linear portion that has a second end portion connected to the second connection portion and that is bent from the second connection portion and extends adjacent to the first linear portion, in which the first linear portion includes: a first portion that is located on a side of the first end portion with respect to the second end portion in the first direction; and a second portion that is located on a side opposite to the first end portion with respect to the second end portion in the first direction, and in which the following Formulas (1) and (2) are satisfied.

$$W_1 > W_2 \ldots (1)$$

$$A_1 > A_2 \ldots (2)$$

Herein, in the above Formula (1), $W_1$ is a width of the first linear portion in the first portion, and $W_2$ is a width of the first linear portion in the second portion, and in the above Formula (2), $A_1$ is an opening ratio of the first linear portion in the first portion, and $A_2$ is an opening ratio of the first linear portion in the second portion.

[2] In the above invention, the following Formula (3) may be satisfied.

$$1.1 \leq A_1/A_2 \leq 1.8 \ \ldots \ (3)$$

[3] In the above invention, the first linear portion may include: a main line portion; at least two branch line portions that are connected to the main line portion; a slit portion that is interposed between the adjacent branch line portions; and a branch portion where the main line portion is branched into a the branch line portions, in which the branch portion is arranged corresponding to the second end portion, and in which the second portion includes the at least two branch line portions and the slit portion.

[4] In the above invention, the following Formula (4) may be satisfied.

$$A_2 > A_3 \ \ldots \ (4)$$

Herein, in the above Formula (4), $A_3$ is an opening ratio of the second linear portion in a portion adjacent to the second portion in a second direction perpendicular to the first direction.

[5] In the above invention, the first lead wire may be configured so as to be partially provided with a opening, and the second lead wire may also be configured so as to be partially provided with a opening.

[6] In the above invention, the following Formula (5) may be satisfied.

$$D_1 > D_2 \ \ldots \ (5)$$

Herein, in the Formula (5), $D_1$ is a density of the first linear portion in the first portion, and $D_2$ is a density of the first linear portion in the second portion.

[7] In the above invention, the wiring body may further include a third lead wire that is connected to a third electrode, in which the third lead wire includes: a third connection portion that is connected to the third electrode; and a third linear portion that has a third end portion connected to the third connection portion and that is bent from the third connection portion and extends in parallel with the first linear portion, in which the first linear portion further includes a third portion that is located on a side opposite to the first electrode with respect to the third end portion in the first direction, and in which the following Formulas (6) and (7) may be satisfied.

$$W_2 > W_3 \ \ldots \ (6)$$

$$A_2 > A_4 \ \ldots \ (7)$$

Herein, in the Formula (6), $W_3$ is a width of the first linear portion in the third portion, and in the Formula (7), $A_4$ is an opening ratio of the first linear portion in the third portion.

[8] In the above invention, the wiring body may further include a third lead wire that is connected to a third electrode, in which the third lead wire includes: a third connection portion that is connected to the third electrode; and a third linear portion that has a third end portion connected to the third connection portion and that is bent from the third connection portion and extends in parallel with the first linear portion, in which the second linear portion includes: a fourth portion that is located on a side of the second electrode with respect to the third end portion in the first direction; and a fifth portion that is located on a side opposite to the second electrode with respect to the third end portion in the first direction, and in which the following Formulas (8) and (9) may be satisfied.

$$W_4 > W_5 \ \ldots \ (8)$$

$$A_5 > A_6 \ \ldots \ (9)$$

Herein, in the Formula (8), $W_4$ is a width of the second linear portion in the fourth portion, and $W_5$ is a width of the second linear portion in the fifth portion, and in the Formula (9), $A_5$ is an opening ratio of the second linear portion in the fourth portion, and $A_6$ is an opening ratio of the second linear portion in the fifth portion.

[9] In the above invention, the following Formulas (10) and (11) may be satisfied.

$$W_6 > W_7 \ \ldots \ (10)$$

$$A_7 > A_8 \ \ldots \ (11)$$

Herein, in the above Formula (10), $W_6$ is a width of the linear portion of the first connection portion, and $W_7$ is a width of the second connection portion, and in the Formula (11), $A_7$ is an opening ratio of the first connection portion, and $A_8$ is an opening ratio of the second connection portion.

[10] A wiring board according to the invention is a wiring board including the wiring body and a support body that supports the wiring body.

[11] A touch sensor according to the invention is a touch sensor including the wiring board.

## EFFECT OF THE INVENTION

In the wiring body of the invention, the above Formulas (1) and (2) are satisfied, and thus, the difference of the electric resistance between lead wires having different lengths is suppressed, so that it is possible to suppress the variation in responsiveness among the plurality of electrodes, and it is possible to suppress the deterioration in bendability of the lead wire.

In addition, in the invention, the above Formulas (1) and (2) are satisfied, and thus, in the second portion of the first linear portion adjacent to the second linear portion, it is possible to suppress short-circuiting between the adjacent lead wires.

## BRIEF DESCRIPTION OF DRAWINGS

Fig. 1 is a plan view illustrating a touch sensor according to a first embodiment of the invention;
Fig. 2 is an exploded perspective view illustrating a touch sensor according to the first embodiment of the invention;
Fig. 3 is a partially enlarged view of a portion III in Fig. 1;
Fig. 4(a) is a cross-sectional view taken along line IVa-IVa of Fig. 3, and Fig. 4(b) is a cross-sectional view taken along line IVb-IVb of Fig. 3;
Fig. 5 is a view illustrating an opening ratio of a linear portion;
Fig. 6 is a plan view illustrating a modified example of a first linear portion according to the first embodiment of the invention;
Figs. 7(a) to 7(e) are cross-sectional views illustrating a method of manufacturing the first wiring body according to the first embodiment of the invention;
Fig. 8 is a plan view illustrating a first wiring body according to a second embodiment of the invention;
Fig. 9 is a partially enlarged view of a portion IX of Fig. 8;
Fig. 10(a) is a cross-sectional view taken along the line Xa-Xa of Fig. 9, Fig. 10(b) is a cross-sectional view taken along line Xb-Xb of Fig. 9, and Fig. 10(c) is a cross-sectional view taken along line Xc-Xc of Fig. 9;
Fig. 11 is a plan view illustrating a first wiring body according to a third embodiment of the invention and is a partially enlarged view corresponding to a portion III in Fig. 1;
Fig. 12 is a plan view illustrating a first wiring body according to a fourth embodiment of the invention and is a partially enlarged view corresponding to the Portion III of Fig. 1;
Fig. 13 is a view illustrating the density of linear portions; and
Figs. 14(a) to 14(c) are plan views illustrating modified examples of connection portions of respective portions in a linear portion according to one embodiment of the invention.

## MODE(S) FOR CARRYING OUT THE INVENTION

Hereinafter, embodiments of the invention will be described below with reference to the drawings.

<First Embodiment

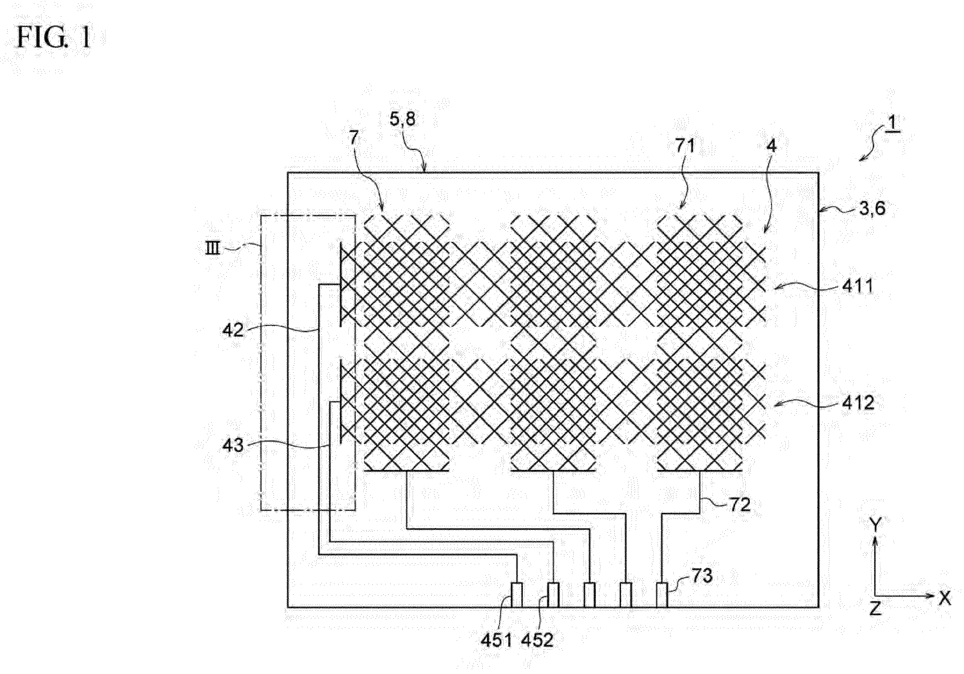

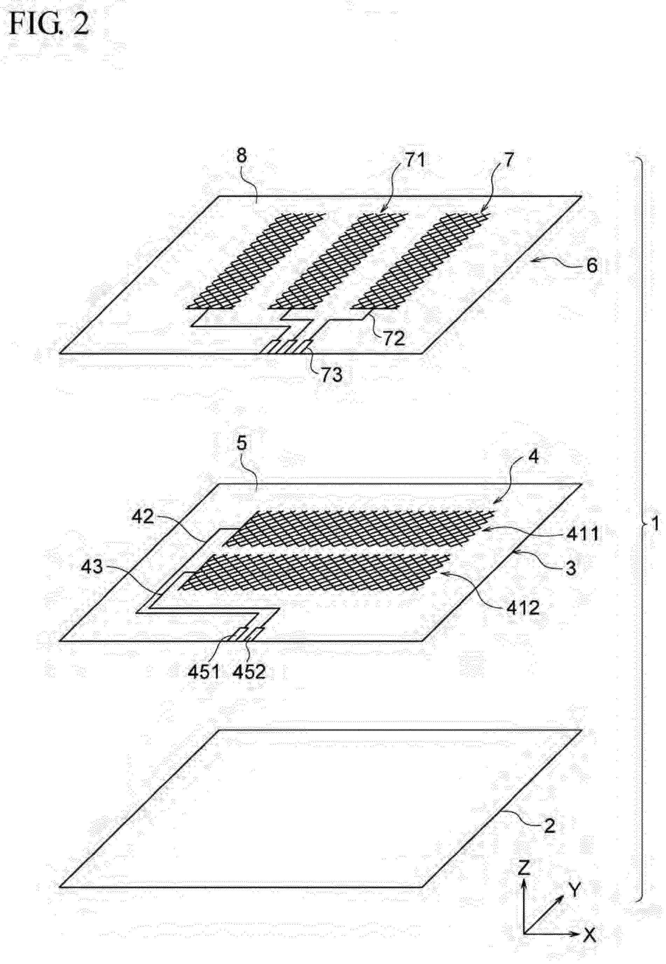

Fig. 1 is a plan view illustrating a touch sensor according to a first embodiment of the invention, and Fig. 2 is an exploded perspective view illustrating a touch sensor according to the first embodiment of the invention.

The touch sensor 1 including the first wiring body 3 according to this embodiment is a projection type electro-capacitive touch panel sensor and is used as an input device having a function of detecting a touch position in combination with a display device (not shown) or the like. The display device is not particularly limited, and a liquid crystal display, an organic EL display, electronic paper, or the like can be used. The touch sensor 1 includes detection electrodes and drive electrodes (electrodes 411 and 412 and electrodes 71 described later) arranged to face each other, and a predetermined voltage from an external circuit (not shown) is periodically applied between the two electrodes.

In such a touch sensor 1, for example, when a finger (external conductor) of an operator approaches the touch sensor 1, a capacitor (electrostatic capacitance) is formed between the external conductor and the touch sensor 1, and thus, an electrical state between the two electrodes is changed. The touch sensor 1 can detect the operation position of the operator based on the electrical change between the two electrodes.

As illustrated in Figs. 1 and 2, the touch sensor 1 is configured with a wiring board including a base material 2, a first wiring body 3, and a second wiring body 6. The touch sensor 1 is configured to have transparency (translucency) as a whole in order to secure the visibility of the display device. The "touch sensor 1" in this embodiment corresponds to an example of a "touch sensor" and a "wiring board" in the invention. In addition, the "first wiring body 3" and the "second wiring body 6" in this embodiment correspond to an example of the "wiring body" in the invention.

The base material 2 is a transparent base material capable of transmitting visible light and supporting the first wiring body 3. As a material constituting the base material 2, polyethylene terephthalate (PET), polyethylene naphthalate (PEN), a polyimide resin (PI), a polyether imide resin (PEI), polycarbonate (PC), polyether ether ketone (PEEK), a liquid crystal polymer (LCP), a cycloolefin polymer (COP), a silicon resin (SI), an acrylic resin, a phenol resin, an epoxy resin, a green sheet, a glass, and the like may be exemplified. An easy adhesion layer or an optical adjustment layer may be formed on the base material 2. The "base material 2" in this embodiment corresponds to an example of the "support body" in the invention.

The first wiring body 3 includes a conductor portion 4 and a resin portion 5. The conductor portion 4 is configured with first and second electrodes 411 and 412 for detection, first and second lead wires 42 and 43, and first and second terminals 451 and 452. The "first electrode 411" in this embodiment corresponds to an example of a "first electrode" in the invention, and the "second electrode 412" in this embodiment corresponds to an example of a "second electrode" in the invention. The "first lead wire 42" in this embodiment corresponds to an example of a "first lead wire" in the invention, and the "second lead wire 43" in this embodiment corresponds to a "second lead wire".

Each of the first and second electrodes 411 and 412 has a mesh shape formed by intersecting thin lines extending linearly. In this embodiment, the electrodes are formed in a mesh shape, so that translucency is provided. The plurality of electrodes 411 and 412 are configured to extend in the X direction in the figure, and the plurality of electrodes 411 and 412 are arranged in order from the +Y side to the -Y side in the figure.

Each of the lead wires 42 and 43 are connected to one end in the longitudinal direction of each of the first and second electrodes 411 and 412. In addition, in each of the lead wires 42 and 43, each of the first and second terminals 451 and 452 is connected to the end portion on the side opposite to each of the first and second electrodes 411 and 412. The plurality of terminals 451 and 452 are arranged collectively at the center of the end portion of the -Y side of the touch sensor 1. The first and second terminals 451 and 452 are electrically connected to an external circuit.

In the touch sensor 1 according to this embodiment, a plurality of electrodes are arranged in a sensor region (not shown) visible from the outside in plan view. In addition, a plurality of lead wires and a plurality of terminals are arranged in a frame region (not shown) which corresponds to an outer peripheral portion of the sensor region and cannot be visually recognized from the outside.

Such a conductor portion 4 is formed by applying a conductive paste and performing curing. As a specific example of the conductive paste constituting the conductor portion 4, a conductive paste in which a conductive powder or a metal salt is formed by mixing a binder resin, water or a solvent, and various additives may be exemplified.

As the conductive powder, a metal such as silver, copper, nickel, tin, bismuth, zinc, indium, and palladium or a carbon-based material such as graphite, carbon black (furnace black, acetylene black, or ketjen black), and carbon nanotube, and carbon nanofiber may be exemplified. As the metal salt, salts of these metals may be exemplified.

In addition, as the conductive powder, a conductive powder having an average particle diameter $\phi$ (0.5 $\mu$m $\leq \phi \leq$ 2 $\mu$m) of 0.5 $\mu$m to 2 $\mu$m or less can be used according to a width of the conductive portion to be formed (for example, the first thin lines 423a and 423b). From the viewpoint of stabilizing the electric resistance in the first thin lines 423a and 423b, it is preferable to use a conductive powder having an average particle diameter $\phi$ of a half or less of the width of the first thin lines 423a and 423b. In addition, as the conductive powder, it is preferable to use particles having a specific surface area of 20 m$^2$/g or more measured by a BET method.

In the case where a relatively small electric resistance of a certain value or less is required, as the first thin lines 423a and 423b, it is preferable to use a material containing the above-mentioned metal material as a main component as the conductive powder. On the other hand, in the case where a relatively large electrical resistance of a certain value or more is permitted, as the first thin lines 423a and 423b, a material containing the above-mentioned carbon-based material as a main component can be used as the conductive powder. In addition, when a carbon-based material is used as the conductive powder, it is preferable from the viewpoint of improving the haze and the total light reflectance of a mesh film.

In addition, similarly to this embodiment, in the case where the electrodes 411 and 412 are formed in a mesh shape to impart light transmittance, as the conductive material constituting the electrodes 411 and 412, a metal material of silver, copper, or nickel or a conductive material (opaque metal material and opaque carbon-based material) which is excellent in conductivity like the above-mentioned carbon-based material but is opaque.

In addition, as the binder resin contained in the conductive paste, an acrylic resin, a polyester resin, an epoxy resin, a vinyl resin, a urethane resin, a phenol resin, a polyimide resin, a silicon resin, a fluororesin, and the like may be exemplified.

As the solvent contained in the conductive paste, $\alpha$-terpineol, butyl carbitol acetate, butyl carbitol, 1-decanol, butyl cellosolve, diethylene glycol monoethyl ether acetate, tetradecane, and the like may be exemplified. In addition, the binder resin may be omitted from the material constituting the conductor portion 4.

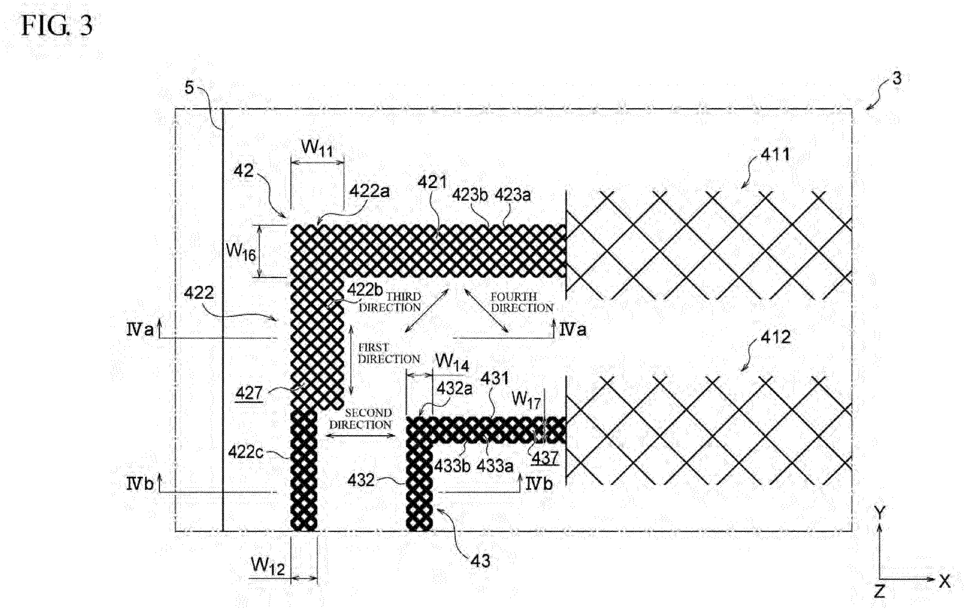

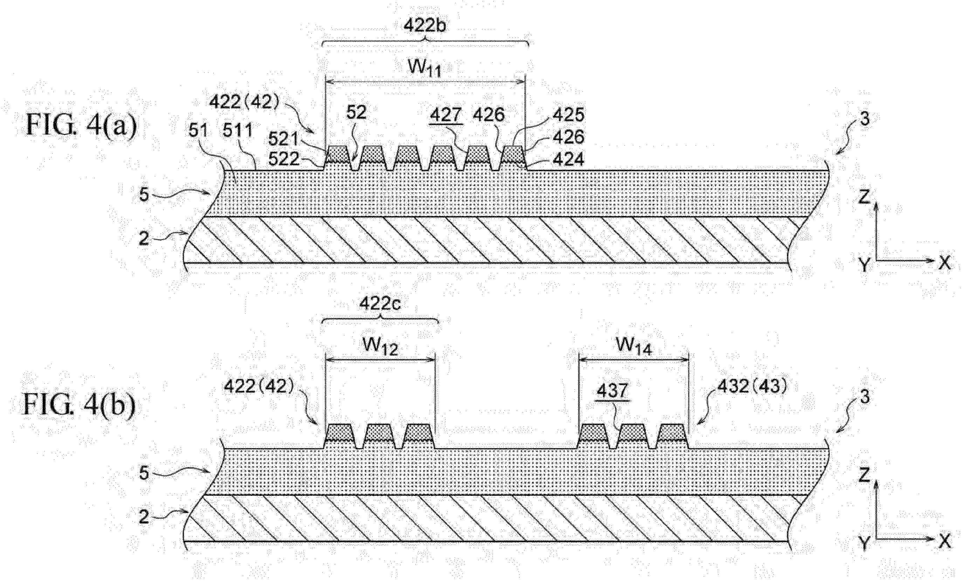

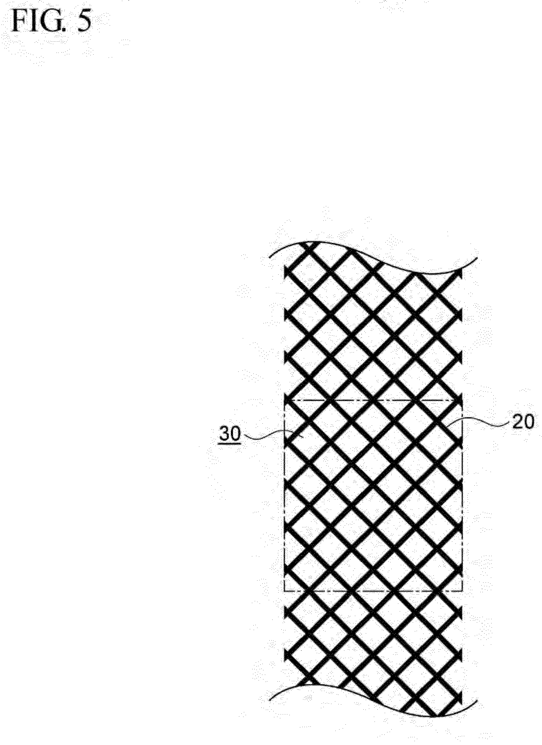

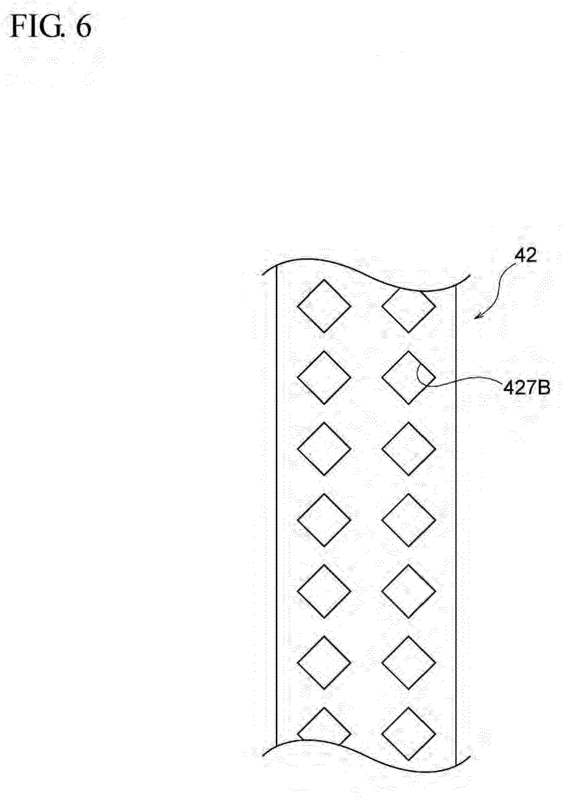

Next, the first and second lead wires 42 and 43 in this embodiment will be described in detail with reference to Figs. 3, 4(a), and 4(b). Fig. 3 is a partial enlarged view of the portion III in Fig. 1, Fig. 4(a) is a cross-sectional view taken along line IVa-IVa of Fig. 3, Fig. 4(b) is a cross-sectional view taken along line IVb-IVb of Fig. 3, Fig. 5 is a view illustrating an opening ratio of a linear portion, and Fig. 6 is a plan view illustrating a modified example of the first linear portion according to the first embodiment of the invention.

As illustrated in Fig. 3, the first lead wire 42 is configured so that openings 427 are partially formed. More specifically, the first lead wire 42 is configured by arranging a plurality of openings 427 formed by intersecting a plurality of first thin lines 423a and 423b in a mesh shape. The first thin lines 423a and 423b are conductor portions of the first lead wire 42 made of the conductive paste constituting the conductor portion 4. The openings 427 are regions where the conductor portions are not formed in the first lead wire 42.

In this embodiment, the first thin line 423a linearly extends along a direction (hereinafter, also simply referred to as a "third direction") inclined at +45° with respect to the X direction. The plurality of first thin lines 423a are arranged at an equal pitch $P_{11}$ in a direction (hereinafter, also simply referred to as a "fourth direction") perpendicular to the third direction. In contrast, the first thin line 423b linearly extends along the fourth direction, and the plurality of first thin lines 423b are arranged at an equal pitch $P_{12}$ in the third direction. The first thin lines 423a and 423b are perpendicular to each other, so that the quadrangular openings 427 are arranged in a mesh shape.

In addition, the configuration of the first lead wire 42 is not particularly limited to the above-described configuration. For example, in this embodiment, the pitch $P_{11}$ of the first thin line 423a and the pitch $P_{12}$ of the first thin line 423b are the same to form square-shaped openings 427 ($P_{11} = P_{12}$), but the shape is not particularly limited thereto. The pitch $P_{11}$ of the first thin line 423a and the pitch $P_{12}$ of the first thin line 423b may be configured to be different from each other ($P_{11} \neq P_{12}$).

In this embodiment, the extension direction of the first thin line 423a is set to a direction inclined at +45° with respect to the X direction, and the extension direction of the first thin line 423b is set to a direction inclined with respect to the extension direction of the first thin line 423a. However, the extension directions are not limited thereto, and the extension directions of the first thin lines 423a and 423b can be arbitrarily set.

In addition, the shape of the opening 427 of the first lead wire 42 may be a geometric pattern as follows. That is, the shape of the opening 427 may be a triangle such as an equilateral triangle, an isosceles triangle, or a right triangle or a quadrangle such as a parallelogram or a trapezoid. In addition, the shape of the opening 427 may be an n-gon such as a hexagon, an octagon, a dodecagon, or a decagon, a circle, an ellipse, a star, or the like. In this manner, as the first lead wire 42, a geometric pattern obtained by repeating various graphic units can be used as the shape of the opening 427 of the first lead wire 42.

Although the first thin lines 423a and 423b have linear shapes in this embodiment, the shapes are not particularly limited. As long as the shapes are extended linearly, a curved shape, a horseshoe-shape, a zigzag line shape, or the like may be used.

In addition, in this embodiment, the widths of the first thin lines 423a and 423b constituting the first portion 422b of the first linear portion 422 described later are set to be smaller than the widths of the first thin lines 423a and 423b constituting the second portion 422c of the first linear portion 422.

In this embodiment, the widths of the first thin lines 423a and 423b are different depending on whether to be thin lines constituting the first portion 422b or to be thin lines constituting the second portion 422c. However, as illustrated in Fig. 4(a), the first thin lines 423a and 423b have substantially the same cross-sectional shape. Hereinafter, the cross-sectional shape of the first thin lines will be described with reference to the first thin line 423a.

The first thin line 423a has a contact surface 424, a top surface 425, and side surfaces 426 in a cross section perpendicular to the third direction. The contact surface 424 is in close contact with a contact surface 521 (described later) constituting a protrusion portion 52 (described later) of the resin portion 5. The top surface 425 is a surface located on the side opposite to the contact surface 424 in the first thin line 423a. In the touch sensor 1 according to this embodiment, the top surface 425 is located on the side operated by the operator. The side surfaces 426 are inclined so as to approach each other as the side surfaces are away from the resin portion 5. The side surfaces 426 are continuous with respective side surfaces 522 (described later) constituting the protrusion portion 52 of the resin portion 5.

The width of the contact surface 424 is preferably 500 nm to 1000 $\mu$m, more preferably 1 $\mu$m to 150 $\mu$m, and still more preferably 5 $\mu$m to 10 $\mu$m. The width of the top surface 425 is preferably 500 nm to 1000 $\mu$m, more preferably 1 $\mu$m to 150 $\mu$m, and still more preferably 5 $\mu$m to 10 $\mu$m.

The height of the first thin line 423a is preferably 50 nm to 3000 $\mu$m, more preferably 500 nm to 450 $\mu$m, and still more preferably 500 nm to 10 $\mu$m.

The top surface 425 is formed to be substantially flat, and flatness thereof is 0.5 $\mu$m or less. The flatness can be defined by JIS (JIS B 0621 (1984)).

The flatness of the top surface 425 is obtained by a non-contact type measurement method using laser light. More specifically, a measurement target is irradiated with a belt-like laser beam, and reflected light is imaged on an image sensor (for example, a two-dimensional CMOS) to measure flatness. As a flatness calculation method, a method (maximum floating type flatness) where, in a plane of the target, planes are set to pass through three points as far as possible, and a maximum value of the deviations is calculated as flatness is used. The flatness measurement method and the flatness calculation method are not particularly limited to the above-described methods. For example, the flatness measurement method may be a contact type measurement method using a dial gauge or the like. In addition, as a flatness calculation method, a method maximum inclination type flatness) where a value of a opening that is obtained when a plane of the target is sandwiched by parallel planes is calculated as flatness may be used.

In this embodiment, the contact surface 424 has a concavo-convex shape configured with fine concavities and convexities. On the other hand, the top surface 425 and the side surface 426 have a substantially flat shape.

In this way, from the viewpoint of firmly fixing the lead wire 42 (conductor portion 4) and the resin portion 5, the contact surface 424 is formed on a relatively rough surface. More specifically, it is preferable that a surface roughness Ra of the contact surface 424 is about 0.1 to 3.0 μm, whereas the surface roughness Ra of the top surface 425 is about 0.001 to 1.0 μm. It is more preferable that the surface roughness Ra of the top surface 425 is 0.001 to 0.3 μm. Such surface roughness can be measured by the JIS method (JIS B 0601 (revised March 21, 2013)).

The first lead wire 42 in this embodiment is configured by arranging a plurality of openings 427 formed by intersecting the first thin lines 423a and 423b in a mesh shape, but not particularly limited thereto. For example, as illustrated in Fig. 6, a portion of the first lead wire 42 that is formed to be linear may be partially removed to form the opening 427B. In this case, the openings may be arranged regularly or may be arranged irregularly. That is, the "opening is partially provided" means that, in the extension direction of the first lead wire 42, as long as the opening is provided in a state where conduction of the first lead wire 42 is secured, the number, shape, and arrangement method of the openings are not particularly limited. In the case where the lead wire has no thin line, the conductor portion of the lead wire has the above-mentioned "contact surface 424", "top surface 425", and "side surface 426".

In this embodiment, as illustrated in Fig. 3, similarly to the first lead wire 42, the second lead wire 43 is also configured by arranging a plurality of openings 437 formed by intersecting a plurality of second thin lines 433a and 433b in a mesh pattern. In this case, the form of the second lead wire 43 (for example, the pitches of the second thin lines 433a and 433b, the shape of the openings 437, and the like) may be the same as or different from that of the first lead wire 42. In addition, the shapes (for example, the cross-sectional shape, the height, the width, and the like) of the second thin lines 433a and 433b may be the same as or different from those of the first thin lines 423a and 423b. In addition, similarly to the first lead wire 42, the number, shape and arrangement method of the openings 437 in the second lead wire 43 are not particularly limited.

The "opening 427" in this embodiment corresponds to an example of the "opening" in the first lead wire of the invention, and the "opening 437" in this embodiment corresponds to an example of the "opening" in the second lead wire of the invention.

The first lead wire 42 in this embodiment as described above includes a first connection portion 421 and a first linear portion 422. The "first connection portion 421" in this embodiment corresponds to an example of the "first connection portion" in the invention, and the "first linear portion 422" in this embodiment corresponds to an example of the "first linear portion" in the invention.

The first connection portion 421 is a portion of the first lead wire 42 connected to the first electrode 411.

The first connection portion 421 extends in a direction different from the extension direction of the first linear portion 422 (hereinafter, also referred to as "the first direction") and, in this embodiment, extends in a direction (hereinafter, also referred to as "second direction") perpendicular to the first direction. In addition, the extension direction of the first connection portion 421 is not limited to the second direction but can be arbitrarily set as long as the extension direction is different from the first direction.

The first linear portion 422 has a first end portion 422a to which the first connection portion 421 is connected. In the first end portion 422a, the first linear portion 422 is bent to extend in the first direction. The "first end portion 422a" in this embodiment corresponds to an example of the "first end portion" in the invention.

As illustrated in Fig. 1, in the touch sensor 1 according to this embodiment, the first electrode 411 is provided farther from the plurality of terminals provided at the end on the -Y side than the second electrode 412 is. Therefore, in the first lead wire 42 corresponding to the first electrode 411, the length of the first linear portion 422 is set to be larger than the length of the second linear portion 432 (described later) of the second lead wire 43.

As illustrated in Fig. 3, the first linear portion 422 includes a first portion 422b and a second portion 422c. In addition, the first and second portions 422b and 422c will be described later in detail. The "first portion 422b" in this embodiment corresponds to an example of the "first portion" in the invention, and the "second portion 422c" in this embodiment corresponds to an example of the "second portion" in the invention.

The second lead wire 43 includes a second connection portion 431 and a second linear portion 432. The "second connection portion 431" in this embodiment corresponds to an example of the "second connection portion" in the invention, and the "second linear portion 432" in this embodiment corresponds to an example of "the second linear portion" in the invention.

The second connection portion 431 is a portion of the second lead wire 43 connected to the second electrode 412. The second connection portion 431 in this embodiment extends in substantially the same direction as the first connection portion 421.

The second linear portion 432 has a second end portion 432a to which the second connection portion 431 is connected. At the second end portion 432a, the second linear portion 432 is bent from the second connection portion 431 to extend in the first direction.

The second linear portion 432 is provided in parallel with the first linear portion 422. In the touch sensor 1, in order to reduce the frame region, the first and second linear portions 422 and 432 adjacent to each other are formed collectively. In this case, the distance between the centers of the first and second linear portions 422 and 432 adjacent to each other is set to be smaller than the distance between the centers of the corresponding first and second electrodes 411 and 412.

As illustrated in Fig. 1, in the first wiring body 3 according to this embodiment, the second electrode 412 is provided to be closer to the plurality of terminals provided at the end portion on the -Y side than the first electrode 411 is. Therefore, in the second lead wire 43 corresponding to the second electrode 412, the length of the second linear portion 432 is shorter than the length of the first linear portion 422.

The second linear portion 432 is formed while a substantially constant width $W_{14}$ across the extension direction is maintained. In addition, from the viewpoint of suppressing the increase in electrical resistance in the second end portion 432a, the width $W_{17}$ of the second connection portion 431 is set to be substantially the same as the width $W_{14}$ of the second linear portion 432.

Next, the first and second portions 422b and 422c of the first linear portion 422 will be described in detail.

In this embodiment, as illustrated in Fig. 3, the first and second portions 422b and 422c of the first linear portion 422 are arranged in order from the first end portion 422a side along the first direction. The first and second portions 422b and 422c are classified based on the relative positional relationship between the first linear portion 422 and the second linear portion 432 that is shorter than the first linear portion 422.

More specifically, the first portion 422b is located on the side of the first end portion 422a with respect to the second end portion 432a in the first direction. On the other hand, the second portion 422c is located on the side opposite to the first end portion 422a with respect to the second end portion 432a in the first direction.

In addition, in the first linear portion 422, "the side of the first end portion 422a with respect to the second end portion 432a in the first direction" or "the side opposite to the first end portion 422a with respect to the second end portion 432a in the first direction" is set with reference to a point where the first linear portion 422 on which the second end portion 432a is projected along the second direction.

The second portion 422c of the first linear portion 422 and the second linear portion 432 are arranged side by side in the second direction. In this embodiment, the width $W_{12}$ of the first linear portion 422 and the width $W_{14}$ of the second linear portion 432 in the second portion 422c are set to be substantially the same.

In this embodiment, as illustrated in Figs. 3, 4(a) and 4(b), the relationship between the width $W_{11}$ of the first linear portion 422 in the first portion 422b and the width $W_{12}$ of the first linear portion 422 in the second portion 422c is set so as to satisfy the following Formula (12).

$$W_{11} > W_{12} \ldots (12)$$

The above Formula (12) is satisfied, and thus, a large conduction path is secured in the first portion 422b, so that the electrical resistance of the relatively long first lead wire 42 is reduced.

In this embodiment, as described above, the widths of the first thin lines 423a and 423b constituting the first portion 422b of the first linear portion 422 are smaller than the widths of the first thin lines 423a and 423b constituting the second portion 422c of the first linear portion 422. Therefore, the relationship between the opening ratio $A_{11}$ of the first linear portion 422 in the first portion 422b and the opening ratio $A_{12}$ of the first linear portion 422 in the second portion 422c is set so as to satisfy the following Formula (13).

$$A_{11} > A_{12} \ldots (13)$$

In addition, the "opening ratio" denotes an opening ratio per predetermined length in plan view, and if a linear portion of a lead wire including a conductor portion and a non-conductor portion in this embodiment is exemplified, as illustrated in Fig. 5, the "opening ratio" denotes a ratio of an area occupied by the non-conductor portion 30 to a total area of the linear portion per predetermined length (a sum of the area of the conductor portion 20 and the area of the non-conductor portion 30). In addition, the non-conductor portion 30 denotes a portion where no conductor portion is formed between both ends of a linear portion when a cross section of the linear portion cut along the second direction is viewed.

As described above, in this embodiment, the opening ratio $A_{11}$ of the first portion 422b having a relatively large width is set to be larger than the opening ratio $A_{12}$ of the second portion 422c having a relatively small width. Therefore, even if the width of the first linear portion 422 is increased in the first portion 422b, the durability against bending of the first lead wire 42 is hardly deteriorated.

Even in the case where the above Formula (13) is satisfied, the electrical resistance in the first portion 422b is set to be smaller than the electrical resistance in the second portion 422c.

In addition, from the viewpoint of more reliably suppressing the deterioration in durability against bending of the first lead wire 42 while reducing the electrical resistance in the first linear portion 422, it is preferable that the ratio $(A_{11}/A_{12})$ of the opening ratio $A_{11}$ to the opening ratio $A_{12}$ is set so as to satisfy the following Formula (14).

$$1.1 \leq A_{11}/A_{12} \leq 1.8 \ldots (14)$$

In this embodiment, in order to satisfy the relationship of the above Formula (14), the width of the first thin line 423a (423b) constituting the first portion 422b is set to be smaller than the width of the first thin line 423a (423b) constituting the second portion 422c, but not particularly limited thereto. The pitch of the first thin lines 423a (423b) constituting the first portion 422b may be set to be larger than the pitch of the first thin line 423a (423b) constituting the second portions 422c. In addition, in order to satisfy the relationship of the above Formula (14), the relative relationship of the width of the first thin line 423a (423b) and the relative relationship of the pitch of the first thin line 423a (423b) may be combined.

The relationship between the width of the first linear portion 422 and the opening ratio of the first linear portion 422 is not particularly limited, but in the case where the width of the first linear portion 422 is less than 50 $\mu$m, it is preferable that the opening ratio of the first linear portion 422 is within the range of 12 to 20%. In the case where the width of the first linear portion 422 is equal to or more than 50 $\mu$m and less than 100 $\mu$m, it is preferable that the opening ratio of the first linear portion 422 is within the range of 15 to 22%. In the case where the width of the first linear portion is equal to or more than 100 $\mu$m and less than 200 $\mu$m, it is preferable that the opening ratio of the first linear portion 422 is within the range of 16 to 24%. In the case where the width of the first linear portion 422 is equal to or more than 200 $\mu$m and less than 300 $\mu$m, it is preferable that the opening ratio of the first linear portion 422 is within the range of 20 to 32%. In addition, it is preferable that the opening ratio of the first linear portion 422 is equal to or less than 40% regardless of the width of the first linear portion 422. In addition, with respect to the second linear portion 432 and the third linear portion 442 described later, the relationship of the widths and the opening ratios is not particularly limited, it is preferable that the relationship of the widths and the opening ratios satisfies the same the relationship of the width of the first linear portion 422 and the opening ratio of the first linear portion 422.

In this embodiment, from the viewpoint of reducing the electrical resistance of the first lead wire 42, the first portion 422b extends to the first end portion 422a while a substantially constant width $W_{11}$ is maintained. In addition, from the viewpoint of suppressing the increase in electrical resistance of the first lead wire 42 in the first end portion 422a to which the first connection portion 421 and the first linear portion 422 are connected, the width $W_{16}$ of the connection portion 421 is set to be substantially the same as the width $W_{11}$ of the first linear portion 422 in the first end portion 422a.

In this case, the relationship between the width $W_{16}$ of the first connection portion 421 and the width $W_{17}$ of the second connection portion 431 and the relationship between the opening ratio $A_{17}$ of the first connection portion 421 and the opening ratio $A_{18}$ of the second connection portion 431 are set so as to satisfy the following Formulas (15) and (16).

$$W_{16} > W_{17} \ldots (15)$$

$$A_{17} > A_{18} \ldots (16)$$

As a result, the electrical resistance of the first lead wire 42 which is relatively long becomes relatively small, and thus, the difference in the electrical resistance between the first and second lead wires 42 and 43 is reduced, and the durability against bending of the first lead wire 42 in the first connection portion 421 having a large width is hardly deteriorated. The width $W_{16}$ of the first connection portion 421 is not particularly limited to the above-mentioned width. From the viewpoint of further reducing the electrical resistance in the first lead wire 42, the width $W_{16}$ of the first connection portion 421 may be set to be larger than the width $W_{11}$ of the first linear portion 422 in the first end portion 422a.

In the case where the first linear portion 422 satisfies the above Formula (12), in the connection portion between the first and second portions 422b and 422c, in plan view, the side portion on the -X side of the first linear portion 422 is substantially continuous while a step difference due to the difference in width between the first and second portions 422b and 422c is formed on the side portion of the +X side of the first linear portion 422.

In this case, in the first lead wire 42, the width of the first linear portion 422 is set to be relatively small in the second portion 422c adjacent to the second linear portion 432, and thus, in forming the conductor portion 4, it is possible to suppress infiltration of the first lead wire 42 in the second portion 422c, and it is possible to suppress short-circuiting between the first and second lead wires 42 and 43 adjacent to each other.

The resin portion 5 functions, for example, as an adhesion layer for retaining the conductor portion 4 on the base material 2. As illustrated in Fig. 4(a), the resin portion 5 includes a flat portion 51 and a protrusion portion 52 protruding from the flat portion 51. The flat portion 51 has a substantially flat upper surface 511 and is uniformly provided so as to cover the main surface of the base material 2 with a substantially constant thickness. The thickness of the flat portion 51 is not particularly limited, but the thickness is set to be within a range of 5 $\mu$m to 100 $\mu$m.

The protrusion portion 52 protrudes toward the conductor portion 4 side (the +Z direction in the figure) as compared with the flat portion 51, and the protrusion portion is provided corresponding to the conductor portion 4. The protrusion portion 52 has a contact surface 521 and side surfaces 522, for example, in a cross section perpendicular to the extension direction of the first thin line 423a.

The contact surface 521 is a surface (for example, the contact surface 424) which is in contact with the conductor portion 4 and has a concavo-convex shape. In this embodiment, since the protrusion portion 52 protrudes from the flat portion 51, the contact surface 521 does not exist in the same plane state of the upper surface 511 of the flat portion 51. The side surfaces 522 are formed to be substantially flat and are inclined so as to be separated from each other as the side surfaces go away from the conductor portion 4. The side surface 522 is continuous with the side surface 426.

As the material constituting the resin portion 5, a UV curable resin, a thermosetting resin, or a thermoplastic resin such as an epoxy resin, an acrylic resin, a polyester resin, a urethane resin, a vinyl resin, a silicon resin, a phenol resin, or a polyimide resin may be exemplified.

As illustrated in Figs. 1 and 2, the second wiring body 6 includes a conductor portion 7 and a resin portion 8.

The conductor portion 7 is configured with a plurality of electrodes 71, a plurality of lead wires 72, and a plurality of terminals 73. In addition, the number of the electrodes 71 constituting the second wiring body 6 is not particularly limited but can be arbitrarily set. In addition, the number of lead wires 72 the number of terminals 73 constituting the second wiring body 6 are set according to the number of the electrodes 71.

Each electrode 71 extends in a direction (Y direction in the figure) perpendicular to the respective electrodes 411 and 412 of the first wiring body 3, and the plurality of electrodes 71 are arranged in parallel in the X direction in the figure. One end of the lead wire 72 is connected to one end of each electrode 71 in the longitudinal direction. In addition, a terminal 73 is connected to the other end of each lead wire 72. The terminal 73 is electrically connected to an external circuit.

In this embodiment, the conductor portion 7 constituting the second wiring body 6 has the same basic structure as that of the conductor portion 4 constituting the first wiring body 3. Therefore, a detailed description of each configuration of the conductor portion 7 is omitted.

The resin portion 8 is formed on the base material 2 so as to cover the first wiring body 3. In this embodiment, the resin portion 8 also functions as an insulating portion for securing insulation between the conductor portion 4 of the first wiring body 3 and the conductor portion 7 of the second wiring body 6. The lower surface of the resin portion 8 has a concavo-convex shape corresponding to the conductor portion 4 of the first wiring body 3, but the other basic structures are the same as those of the resin portion 5 of the first wiring body 3. Therefore, a detailed description of each configuration of the resin portion 5 will be omitted.

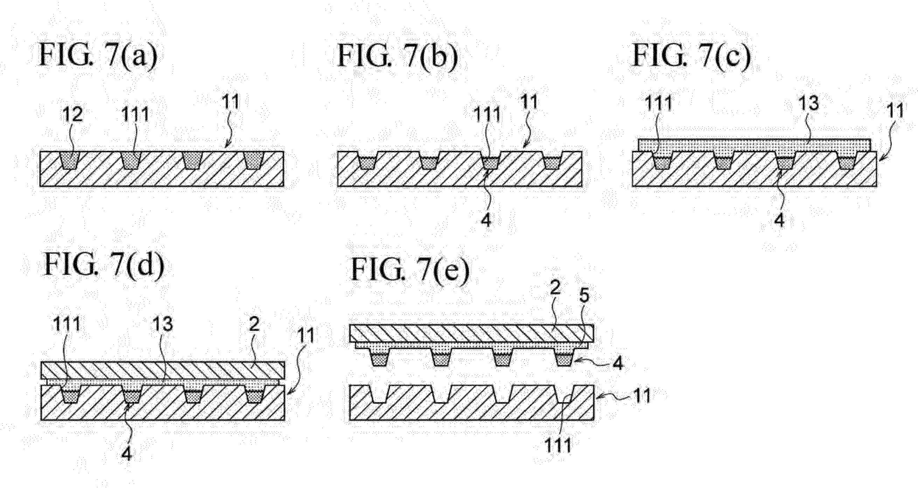

Next, a method of manufacturing the first wiring body 3 according to this embodiment will be described. Figs. 7(a) to 7(e) are cross-sectional views illustrating the method of manufacturing the first wiring body according to the first embodiment of the invention.

The manufacturing method of the first wiring body 3 according to this embodiment includes a filling process S10 of filling a concave portion 111 of the intaglio plate 11 with the conductive material 12, a firing process S20 of performing at least one process of drying/heating and energy irradiation on the conductive material 12, an applying process S30 of applying a resin material 13 on the intaglio plate 11 and the conductive material 12, a placing process S40 of placing the base material 2 on the intaglio plate 11, and a peeling process S50 of peeling the conductive material 12 and the resin material 13 from the intaglio plate 11.

First, as illustrated in Fig. 7(a), as the filling process S10, the intaglio plate 11, in which the concave portion 111 having a shape corresponding to the shape of the conductor portion 4 is formed, is filled with the conductive material 12. As the conductive material 12 filled in the concave portion 111 of the intaglio plate 11, the above-described conductive paste is used. As the material constituting the intaglio plate 11, a glass such as silicon, nickel, and a silicon dioxide, a ceramic, an organic silica, a glassy carbon, a thermoplastic resin, a photocurable resin, and the like may be exemplified. The cross-sectional shape of the concave portion 111 is configured to be tapered such that the width thereof is decreased toward the bottom portion. A releasing layer (not shown) made of a graphite-based material, a silicon-based material, a fluorine-based material, a ceramic-based material, an aluminum-based material, or the like is formed in advance on the surface of the concave portion 111 in order to improve releasability.

As a method for filling the concave portion 111 of the intaglio plate 11 with the conductive material 12, a dispensing method, an inkjet method, and a screen printing method may be exemplified. Alternatively, a method of wiping, scraping, sucking, pasting, washing, and blowing off the applied conductive material 12 other than the concave portion 111 after application by a slit coating method, a bar coating method, a blade coating method, a dip coating method, a spray coating method, or a spin coating method can be exemplified. These methods can be appropriately selected and used according to the composition and the like of the conductive material 12 and the shape and the like of the intaglio plate 11, and the like.

Next, in the firing process S20, as illustrated in Fig. 7(b), the conductive material 12 filled in the concave portion 111 is dried or heated. The drying or heating conditions of the conductive material 12 can be appropriately set according to the composition and the like of the conductive material 12.

Herein, volume contraction occurs in the conductive material 12 due to the drying or heating process. At this time, the bottom surface and the side surfaces of the conductive material 12 become flat along the shape of the inner wall surfaces of the concave portion 111. In addition, the shape of the top surface of the conductive material 12 is not affected by the shape of the concave portion 111. Herein, a fine concavo-convex shape is formed on the top surface of the conductive material 12.

Next, in an applying process S30, as illustrated in Fig. 7(c), a resin material 13 for forming the resin portion 5 is applied on the intaglio plate 11. As the resin material 13, the above-mentioned resin material is used. In addition, as a method of applying the resin material 13 on the intaglio plate 11, a screen printing method, a spray coating method, a bar coating method, a dipping method, and an ink jet method may be exemplified. By this application, the resin material 13 enters the concave portion 111.

Next, in the placing process S40, as illustrated in Fig. 7(d), the base material 2 is placed on the layer of the resin material 13 applied on the intaglio plate 11. It is preferable that this process is performed under vacuum in order to prevent air bubbles from entering between the resin material 13 and the base material 2. As the material of the base material 2, the above-described materials may be exemplified.

Next, in the peeling process S50, the resin material 13 is cured. As a method for curing the resin material 13, irradiation of energy ray such as ultraviolet rays, infrared rays, or laser light, heating, heating and cooling, drying, and the like may be exemplified. Thereafter, as illustrated in Fig. 7(e), the base material 2, the resin material 13 and the conductive material 12 are released from the intaglio plate 11, so that the resin material 13 and the conductive material 12 are allowed to follow the base material 2 to be peeled off from the intaglio plate 11 (in this case, the resin material 13 and the conductive material 12 are integrally peeled off from the intaglio plate 11).

In addition, in this embodiment, the base material 2 is laminated on the intaglio plate 11 after the resin material 13 is applied on the intaglio plate 11, but not particularly limited thereto. For example, by arranging a resin material 13 previously applied on the main surface (surface facing the intaglio plate) of the base material 2 on the intaglio plate 11, the base material 2 may be laminated on the intaglio plate 11 through the resin material 13.

In addition, although not particularly illustrated, after obtaining the first wiring body 3 by performing the above process, a transparent resin material constituting the resin portion 8 is applied so as to cover the first wiring body 3. As such a resin material, a transparent resin material as described above is used.

In addition, from the viewpoint of securing sufficient fluidity at the time of applying, it is preferable that the viscosity of the transparent resin material constituting the resin portion 8 is 1 mPa·s to 10,000 mPa·s. From the viewpoint of the durability of the conductor portion 7, it is preferable that a storage elastic modulus of the cured resin is $10^6$ Pa or more and $10^9$ Pa or less. As a method for applying the resin material of the resin portion 8, a screen printing method, a spray coating method, a bar coating method, a dipping method, an ink jet method, and the like may be exemplified.

In addition, although not specifically illustrated, by forming the conductor portion 7 on the resin portion 8, the touch sensor 1 according to this embodiment can be achieved. The conductor portion 7 can be formed by a method similar to the method of forming the conductor portion 4.

The first wiring body 3, the wiring board, and the touch sensor 1 according to this embodiment have the following effects.

As the wiring body in the related art, in the wiring bodies described in Patent Documents 1 to 3, the lengths of the lead wires formed corresponding to the plurality of electrodes are formed to have different lengths according to the arrangement of the respective electrodes. For this reason, electrical resistance among the plurality of lead wires becomes uneven, and thus, there is a possibility that the variation in responsiveness between the electrodes occurs.

In addition, in such a wiring body in the related art, in order to easily connect the wiring body to the outside, in the case where a plurality of lead wires are provided collectively, there is a problem in that each lead wire may infiltrate and spread, and the adjacent lead wires may be short-circuited.

In addition, as the wiring body in the related art, in the wiring body described in Patent Document 4, the width of the linear portion of the lead wire formed corresponding to each electrode is increased as the length dimension of the linear portion becomes longer. In this case, in the region where the width of the linear portion is formed to be large, there is problem in that the bendability of the lead wire may be deteriorated. For this reason, in the wiring body described in Patent Document 4, it is not possible to achieve compatibility between suppression of the variation in responsiveness among the respective electrodes and suppression of the deterioration in bendability of the lead wire.

On the other hand, in this embodiment, the above Formulas (12) and (13) are set to be satisfied, and thus, a large conduction path is secured in the first portion 422b, so that the electrical resistance of the relatively long first lead wire 42 is reduced, and even if the width of the first linear portion 422 is increased in the first portion 422b, the durability against bending of the first lead wire 42 is hardly deteriorated. Therefore, it is possible to achieve compatibility between suppression of the variation in responsiveness among the plurality of electrodes 411 and 412 and suppression of the deterioration in bendability of the first lead wire 42.

In addition, in this embodiment, the ratio ($A_{11}/A_{12}$) of the opening ratio $A_{11}$ of the first linear portion 422 in the first portion 422b to the opening ratio $A_{12}$ of the first linear portion 422 in the second portion 422c is set so as to satisfy the above Formula (14). Therefore, it is possible to more reliably suppress the deterioration in bendability while reducing the electrical resistance of the first lead wire 42.

In addition, in this embodiment, the above Formula (12) is set to be satisfied, and thus, by merely utilizing a vacant space of the frame region of the touch sensor 1, it is possible to relatively easily suppress the variation in responsiveness among the plurality of electrodes 411 and 412.

In addition, in this embodiment, the above Formula (12) is set so as to be satisfied, and thus, it is possible to suppress short-circuiting between the adjacent first and second lead wires 42 and 43 in the second portion 422c of the first linear portion 422 that is adjacent to the second linear portion 432.

In addition, in this embodiment, the first lead wire 42 is configured so that a opening 427 is partially provided, and the second lead wire 43 is configured so that a opening 437 is partially provided. As a result, even if the electrodes 411 and 412 and the first and second lead wires 42 and 43 are collectively formed, disconnection or the like is unlikely to occur therebetween. In addition, the electrodes 411 and 412 and the first and second lead wires 42 and 43 are collectively formed, so that it is possible to simplify the manufacturing process of the first wiring body 3, and it is possible to reduce the production cost of the first wiring body 3. In addition, in the case where the openings 427 and 437 are partially formed in the first and second lead wires 42 and 43, the electric resistance of the lead wires tends to be higher than that in the case where the lead wires are formed in a solid pattern, so that variations in electrical resistance between the lead wires having different lengths easily occurs. On the other hand, by applying the invention, it is possible to more reliably suppress the variation in electrical resistance between the first and second lead wires 42 and 43 having different lengths.

In addition, in this embodiment, since the cross-sectional area of the first connection portion 421 is larger than the cross-sectional area of the second connection portion 431, it is possible to reduce the electrical resistance of the first lead wire 42 larger than the second lead wire 43, so that it is possible to reduce the difference in the electrical resistance between the first lead wire 42 and the second lead wire 43.

In addition, in the above embodiment, the first wiring body 3 including the first and second lead wires 42 and 43 is described, but the first wiring body 3 may further include the third lead wire 44. Hereinafter, an embodiment in which the first wiring body 3B includes the first to third lead wires 42B, 43B, and 44 will be described below.

<Second Embodiment

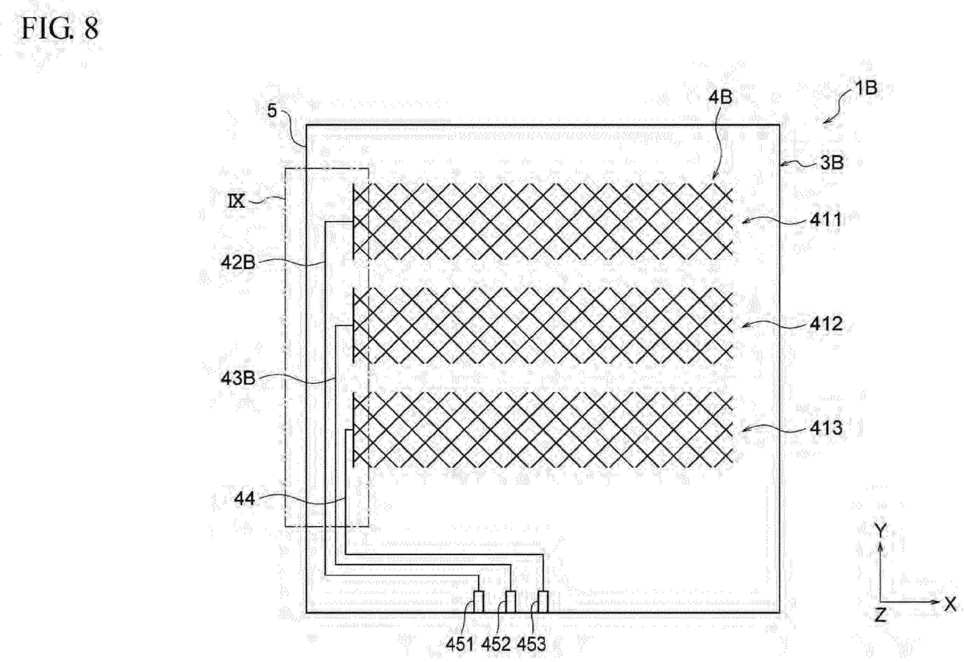

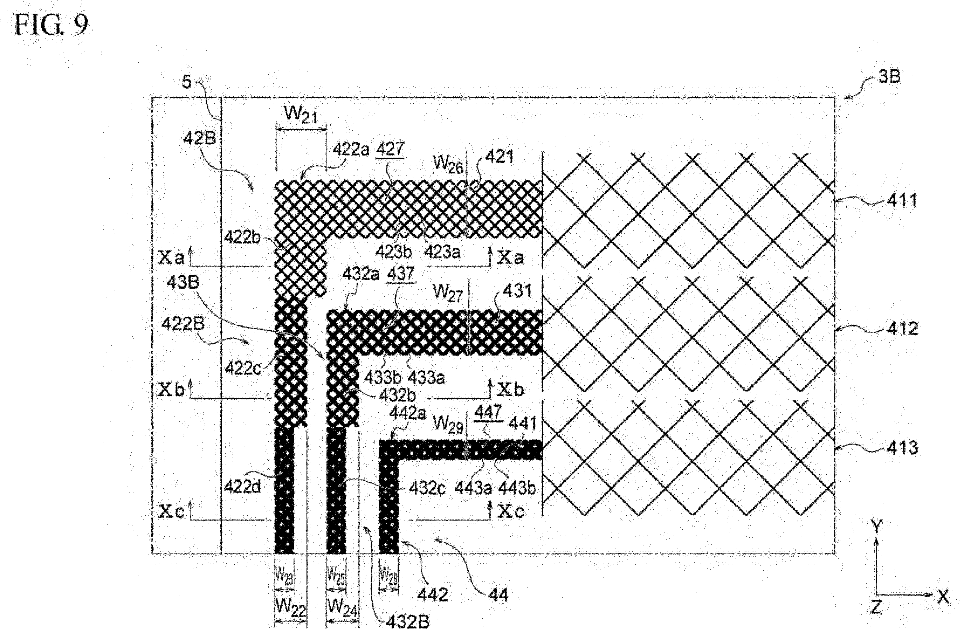

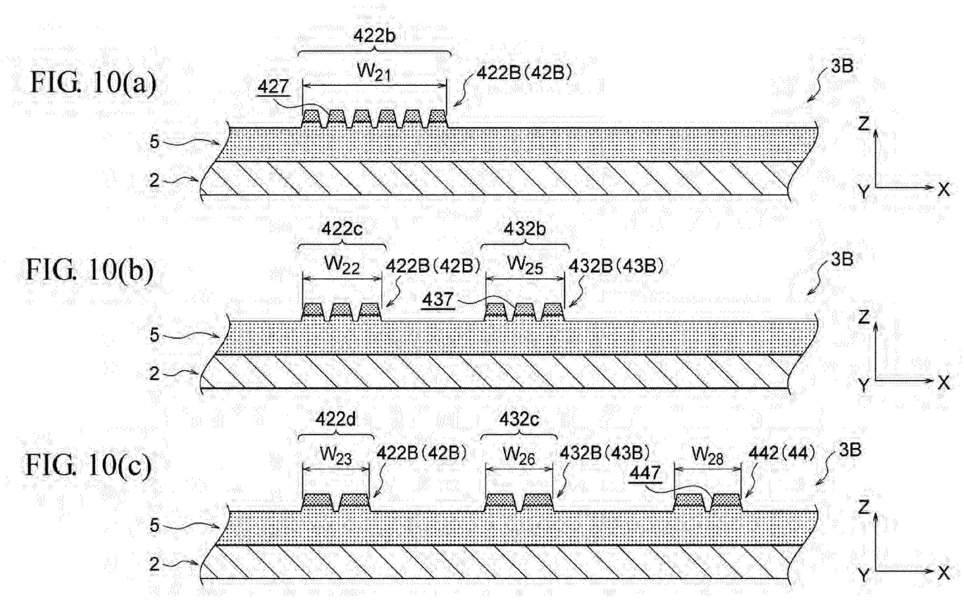

Fig. 8 is a plan view illustrating the first wiring body according to a second embodiment of the invention, Fig. 9 is a partially enlarged view of the Portion IX of Fig. 8, Fig. 10(a) is a cross-sectional view taken along line Xa-Xa of Fig. 9, Fig. 10(b) is a cross-sectional view taken along line Xb-Xb of Fig. 9, and Fig. 10(c) is a cross-sectional view taken along line Xc-Xc of Fig. 9.

In this embodiment, the configuration of the conductor portion 4B is different from that of the conductor portion 4 in the first embodiment, but the other configurations are the same as those of the first embodiment. Hereinafter, only the differences of the conductor portion 4B in the second embodiment from those of the first embodiment will be described, the same configurations as those of the first embodiment are denoted by the same reference numerals, and the description thereof will be omitted.

As illustrated in Fig. 8, the conductor portion 4B is configured with first to third electrodes 411, 412 and 413, first to third lead wires 42B, 43B and 44, and first to third terminals 451, 452, and 453. The plurality of electrodes 411, 412, and 413 are arranged at equal intervals in order from the +Y side to the -Y side in the figure.

First to third lead wires 42B, 43B, and 44 are connected to respective ends of the first to third electrodes 411, 412, and 413 in the longitudinal direction. In addition, in the lead wires 42B, 43B, and 44, first to third terminals 451, 452, and 453 are connected to the end portions on the sides opposite to the first to third electrodes 411, 412, and 413, respectively. The plurality of terminals 451, 452, and 453 are arranged collectively at the center of the -Y side end portion of the touch panel 1.

The "third electrode 413" in this embodiment corresponds to an example of the "third electrode" in the invention, the "first lead wire 42B" in this embodiment corresponds to the "first lead wire" in the invention, the "second lead wire 43B" in this embodiment corresponds to an example of "the second lead wire" in the invention, and the "third lead wire 44" in this embodiment corresponds to an example of the "third lead wire" in the invention.

Next, the first to third lead wires 42B, 43B, and 44 in this embodiment will be described with reference to Figs. 9 and 10(a) to 10(c).

Similarly to the first embodiment, the first and second lead wires 42B and 43B are configured by arranging a plurality of openings formed by intersecting a plurality of thin lines in a mesh pattern. In addition, similarly to the first and second lead wires 42B and 43B, the third lead wire 44 is also configured by arranging a plurality of openings 447 formed by intersecting a plurality of third thin lines 443a and 443b in a mesh shape. In this case, the form of the third lead wire 44 (for example, the pitches of the thin lines 443a and 443b, the shape of the opening 447, and the like) may be the same as or different from that of the other lead wires. In addition, the shapes of the third thin lines 443a and 443b may be the same as or different from the shapes of the other thin lines.

In the first linear portion 422B in this embodiment, the width of the first thin lines 423a and 423b constituting the first to third portions 422b, 422c, and 422d is different in the first to third portions 422b, 422c, and 422d, and the width of the first thin lines 423a and 423b becomes smaller as the portion is closer to the first end portion 422a.

The first linear portion 422B of the first lead wire 42B in this embodiment includes a first portion 422b, a second portion 422c, and a third portion 422d. In addition, the second linear portion 432B of the second lead wire 43B in this embodiment includes a fourth portion 432b and a fifth portion 432c. In addition, each portion of the first and second linear portions 422B and 432B will be described later in detail.

The "third portion 422d" in this embodiment corresponds to an example of the "third portion" in the invention, the "fourth portion 432b" in this embodiment corresponds to an example of the "fourth portion" in the invention, and the "fifth portion 432c" in this embodiment corresponds to an example of the "fifth portion" in the invention.

The third lead wire 44 includes a third connection portion 441 and a third linear portion 442. The "third connection portion 441" in this embodiment corresponds to an example of the "third connection portion" in the invention, and the "third linear portion 442" in this embodiment corresponds to an example of the "third linear portion" in the invention.

The third connection portion 441 is a portion of the third lead wire 44 connected to the third electrode 413. The third connection portion 441 extends in substantially the same direction as the first and second connection portions 421 and 431.

The third linear portion 442 has a third end portion 442a to which the third connection portion 441 is connected. In the third end portion 442a, the third linear portion 442 is bent from the third connection portion 441 and is provided in parallel with the first and second linear portions 422B and 432B. The "third end portion 442a" in this embodiment corresponds to an example of the "third end portion" in the invention.

As illustrated in Fig. 8, in the touch sensor 1B according to this embodiment, the third electrode 413 is provided to be closer to the plurality of terminals provided at the end on the -Y side than the first and second electrodes 411 and 412 are. Therefore, in the third lead wire 44 corresponding to the third electrode 413, the length of the third linear portion 442 is shorter than the length of the linear portion of the other lead wire (specifically, the first and second linear portions 422B and 432B).

As illustrated in Fig. 9, the third linear portion 442 is formed while a substantially constant width $W_{28}$ across the extension direction is maintained. In addition, from the viewpoint of suppressing the increase in the electrical resistance in the third end portion 442a to which the third linear portion 442 and the third connection portion 441 are connected, the width $W_{29}$ of the third connection portion 441 is set to be substantially equal to or larger than the width $W_{28}$ of the linear portion 442.

Next, the first to third portions 422b, 422c, and 422d of the first linear portion 422B and the fourth and fifth portions 432b and 432c of the second linear portion 432B will be described in more detail.

In this embodiment, as illustrated in Fig. 9, the first to third portions 422b, 422c, and 422d of the first linear portion 422B are arranged in order from the first end portion 422a side along the first direction. The first to third portions 422b, 422c, and 422d are classified based on the relative positional relationship between the first linear portion 422B and the second and third linear portions 432B, 442 that are shorter than the first linear portion 422.

More specifically, the first portion 422b is located similarly to the first embodiment. The second portion 422c is located on the side opposite to the first end portion 422a with respect to the second end portion 432a in the first direction and is located on the side of the first end portion 422a with respect to the third end portion 442a in the first direction. In addition, the third portion 422d is located on the side opposite to the first end portion 422a with respect to the third end portion 442a in the first direction.

In addition, in the first linear portion 422B, "the side of the first end portion 422a with respect to the third end portion 442a in the first direction" or "the side opposite to the first end portion 422a with respect to the third end portion 442a in the first direction" is set with reference to a point where the first linear portion 422B on which the third end portion 442a is projected along the second direction.

In addition, the fourth and fifth portions 432b and 432c of the second linear portion 432B are arranged in order from the second end portion 432a side along the first direction. The fourth and fifth portions 432b and 432c are classified based on of the relative positional relationship between the second linear portion 432B and the third linear portion 442 that is shorter than the second linear portion 432B.

More specifically, the fourth portion 432b is located on the side of the second end portion 432a with respect to the third end portion 442a in the first direction. On the other hand, the fifth portion 432c is located on the side opposite to the second end portion 432a with respect to the third end portion 442a in the first direction.

In addition, in the second linear portion 432B, "the side of the second end portion 432a with respect to the third end portion 442a in the first direction" or "the side opposite to the second end portion 432a with respect to the third end portion 442a in the first direction" is set with reference to a point where the second linear portion 432B on which the third end portion 442a is projected along the second direction.

In the first wiring body 3B according to this embodiment, the second portion 422c of the first linear portion 422B and the fourth portion 432b of the second linear portion 432B are arranged side by side in the second direction. The third portion 422d of the first linear portion 422B, the fifth portion 432c of the second linear portion 432B, and the third linear portion 442 are arranged side by side in the second direction.

In the plurality of lead wires 42B, 43B, and 44 in this embodiment, same in adjacent portions, the widths of the linear portions are set to be substantially the. More specifically, the width $W_{22}$ of the first linear portion 422B in the second portion 422c and the width $W_{24}$ of the sec-

ond linear portion 432B in the fourth portion 432b are set to be substantially the same. In addition, the width $W_{23}$ of the first linear portion 422B in the third portion 422d, the width $W_{25}$ of the second linear portion 432B in the fifth portion 432c, and the width $W_{28}$ of the third linear portion 442 are set to be substantially the same.

In the first linear portion 422B in this embodiment, the relationship between the widths $W_{21}$ and $W_{22}$ of the first linear portion 422B in the first and second portions 422b and 422c is set so as to satisfy the same relationship as the Formula (12), and as illustrated in Figs. 9, 10(a), and 10(b), the relationship between the width $W_{22}$ of the first linear portion 422B in the second portion 422c and the width $W_{23}$ of the first linear portion 422B in the third portion 422d is set so as to satisfy the following Formula (17).

$$W_{22} > W_{23} \ldots (17)$$

In this manner, in the first linear portion 422B in this embodiment, the widths of the first to third portions 422b, 422c, and 422d are different, and thus, the width of the first linear portion 422B becomes larger, as the first linear portion becomes closer to the first end portion 422a. Therefore, a large conduction path is secured in the first and second portions 422b and 422c, so that the electrical resistance of the relatively long first lead wire 42B is reduced.

In addition, in this embodiment, as described above, the width of the first thin lines 423a and 423b constituting the first to third portions 422b, 422c, and 422d in the first linear portion 422B is different in the first to third the portions 422b, 422c, and 422d, and the width of the first thin lines 423a and 423b becomes smaller as the portion is closer to the first end portion 422a. Therefore, the relationship between the opening ratio $A_{21}$ of the first linear portion 422B in the first portion 422b and the opening ratio $A_{22}$ of the first linear portion 422B in the second portion 422c is set so as to satisfy the above Formula (13), and the relationship between the opening ratio $A_{22}$ of the first linear portion 422B in the second portion 422c and the opening ratio $A_{24}$ of the first linear portion 422B in the third portion 422d is set so as to satisfy the following Formula (18).

$$A_{22} > A_{24} \ldots (18)$$

The above Formulas (13) and (18) are set to be satisfied, and thus, even if the width of the first linear portion 422B becomes large in the first and second portions 422b and 422c, the bendability against bending of the first linear portion 422B is hardly deteriorated.

In addition, even in the case where the above Formulas (13) and (18) are satisfied, in the first to third portions 422b, 422c, and 422d of the first linear portion 422B, the electrical resistance becomes smaller, as the portion is close to the first end portion 422a.

In addition, from the viewpoint of more reliably suppressing the deterioration in bendability while reducing the electrical resistance in the first linear portion 422B, it is preferable that the ratio ($A_{21}/A_{24}$) of the opening ratio $A_{21}$ to the opening ratio $A_{24}$ is set so as to satisfy the following Formula (19).

$$1.1 \leq A_{21}/A_{24} \leq 1.8 \ldots (19)$$

In this case, the ratio ($A_{21}/A_{24}$) of the largest opening ratio $A_{21}$ to the smallest opening ratio $A_{24}$ among the opening ratios of the first linear portion 422B in the first to third portions 422b, 422c, and 422d satisfies the above Formula (19), and thus, the ratio ($A_{21}/A_{22}$) of the opening ratio $A_{21}$ to the opening ratio $A_{22}$ of the first linear portion 422B in the second portion 422c is also set to be within the same range as the range of the above Formula (19). The ratio ($A_{22}/A_{24}$) of the opening ratio $A_{22}$ to the opening ratio $A_{24}$ is also set to be within the same range as the range of the above Formula (19).

In addition, similarly to the above-described embodiment, the above Formula (18) may be satisfied by changing the widths of the first thin lines 423a and 423b constituting the second and third portions 422c and 422d, and the above Formula (18) may be satisfied by changing the pitches of the first thin lines 423a and 423b constituting the second and third portions 422c and 422d.

In the case where the first linear portion 422B satisfies the above Formula (17), in the connection portion between the second and third portions 422c and 422d, similarly to the connection portion between the first and second portions 422b and 422c, in plan view, the side portion on the -X side of the first linear portion 422B is substantially continuous while a step difference due to the difference in width between the second and third portions 422c and 422d is formed on the side on the +X side of the first linear portion 422B.

In this case, in the first linear portion 422B, the width of the first linear portion 422B is changed in the connection portion between the first and second portions 422b and 422c, and the width of the first linear portion 422B is further changed in the connection portion between the second and third portions 422c and 422d. As a result, in the first linear portion 422B of this embodiment, the width of the first linear portion 422B is gradually increased along the first direction as the first linear portion approaches the first end portion 422a.

As illustrated in Figs. 9, 10(b), and 10(c), in the second linear portion 432B in this embodiment, the relationship between the width $W_{24}$ of the second linear portion 432B in the fourth portion 432b and the width $W_{25}$ of the second linear portion 432B in the fifth portion 432c is set so as to satisfy the following Formula (20).

$$W_{24} > W_{25} \ldots (20)$$

In addition, in the second linear portion 432B, the relationship between the opening ratio $A_{25}$ of the second linear portion 432B in the fourth portion 432b and the opening ratio $A_{26}$ of the second linear portion 432B in the fifth portion 432c is set so as to satisfy the following Formula (21).

$$A_{25} > A_{26} \ldots (21)$$

The above Formulas (20) and (21) are satisfied, and thus, a large conduction path is secured in the fourth portion 432b, so that the electrical resistance of the second linear portion 432B is reduced, and even if the width of the second linear portion 432B is set to be increased in the fourth portion 432b, the durability against bending of the second lead wire 43B is hardly deteriorated.

The first wiring body 3B according to this embodiment has the following effects.

The first wiring body 3B according to this embodiment can also obtain the same functions and effects as those of the first wiring body 3 described in the first embodiment.

In addition, in this embodiment, the above Formula (20) is satisfied, and thus, the variation in electrical resistance between the second and third lead wires 43B and 44B having different lengths is suppressed, so that it is possible to suppress the variation in responsiveness between the second and third electrodes 412 and 413. As a result, it is possible to suppress the variation in responsiveness among the first to third electrodes 411, 412, and 413.

In addition, the above Formulas (13) and (18) are satisfied, and thus, even if the width of the first linear portion 422B is set to be increased in the first and second portions 422b and 422c, the durability against bending of the first lead wire 42B is hardly deteriorated. Therefore, it is possible to suppress the deterioration in bendability of the first lead wire 42B.

In this embodiment, in the first lead wire 42B, the width $W_{23}$ of the first linear portion 422B in the third portion 422d is set to be smaller than the width $W_{22}$ of the first linear portion 422B in the second portion 422c (that is, the above Formula (17) is satisfied). Therefore, in forming the conductor portion 4B, infiltration of the first lead wire 42B in the third portion 422d is further suppressed, so that short-circuiting between the first lead wire 42B and the adjacent second lead wire 43B is more reliably suppressed.

In addition, in this embodiment, in the second lead wire 43B, the width $W_{25}$ of the second linear portion 432B in the fifth portion 432c is set to be smaller than the width $W_{24}$ of the second linear portion 432B in the fourth portion 432b (that is, the above Formula (20) is satisfied).

Therefore, in forming the conductor portion 4B, infiltration of the second lead wire 43B in the fourth portion 432b is suppressed, so that short-circuiting between the second lead wire 43B and the adjacent first and third lead wires 42B and 44B is suppressed.

In addition, in this embodiment, by satisfying the above Formula (19), it is possible to more reliably suppressing the deterioration in bendability while reducing the electrical resistance of the first lead wire 42B.

<Third Embodiment

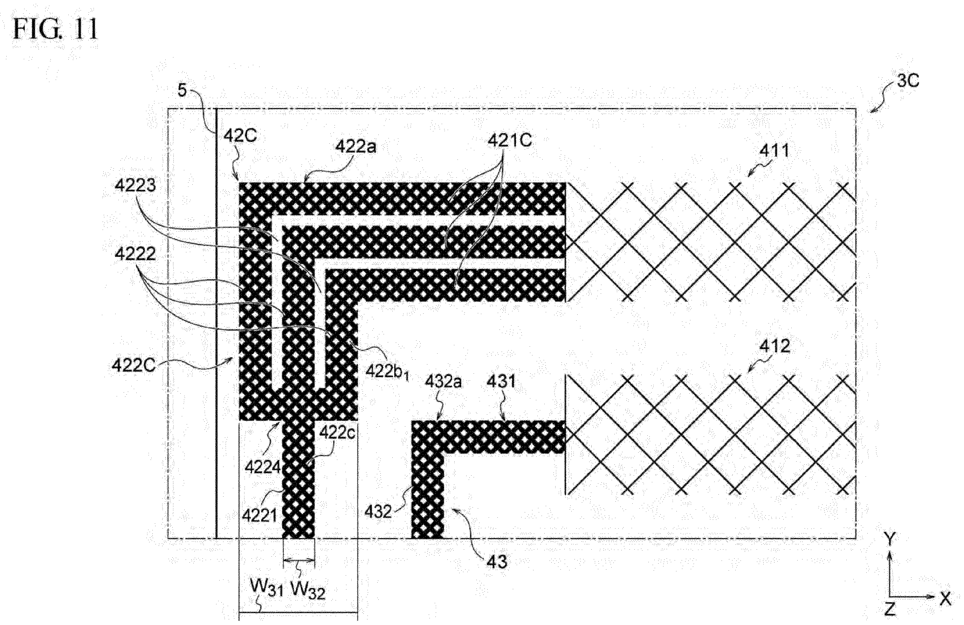

Fig. 11 is a plan view illustrating a first wiring body according to a third embodiment of the invention and is a partially enlarged view corresponding to Portion III in Fig. 1.

In this embodiment, the configuration of the first wiring body 3C is different from that of the first wiring body 3 according to the first embodiment, but the other configurations are the same as those of the first embodiment. Hereinafter, only the differences of the first lead wire 42C in the third embodiment from those of the first embodiment will be described, the same configurations as those of the first embodiment are denoted by the same reference numerals, and the description thereof will be omitted.

As illustrated in Fig. 11, the first linear portion 422C of the first lead wire 42C in this embodiment includes a main line portion 4221, a plurality of branch line portions 4222, a slit portion 4223, and a branch portion 4224. The "main line portion 4221" in this embodiment corresponds to an example of the "main line portion" in the invention, the "branch line portion 4222" in this embodiment corresponds to an example of the "branch line portion" in the invention, the "slit portion 4223" in this embodiment corresponds to an example of the "slit portion" in the invention, and the "branch portion 4224" in this embodiment corresponds to an example of the "branch portion" in the invention.

The main line portion 4221 is formed between the first terminal 451 and the branch portion 4224. In the branch portion 4224, a plurality of branch line portions 4222 are branched from the main line portion 4221. A slit portion 4223 which is interposed between the adjacent branch line portions 4222 and insulates the adjacent branch line portions 4222 is formed between the adjacent branch line portions 4222.

In addition, the first connection portion 421C is divided into a plurality of portions according to the number of the branch line portions 4222. The plurality of first connection portions 421C are connected to the plurality of branch line portions 4222, respectively. The slit portion 4223 extends to a space between the adjacent first connection portions 421C.

In this embodiment, the widths and pitches of the plurality of first thin lines 423a and 423b constituting the main line portion 4221 and the widths and pitches of the plurality of first thin lines 423a and 423b constituting the branch line portion 4222 are set to be substantially the same. In addition, similarly to the above embodiment, the widths and pitches of the plurality of first thin lines 423a and 423b constituting the main line portion 4221 and the widths and pitches of the plurality of first thin lines 423a and 423b constituting the branch line portion 4222 may be different from each other.

In the process of manufacturing the first wiring body 3C, from the viewpoint of stabilizing the shape of the first lead wire 42C, it is preferable that the width of the main line portion 4221 and the width of the branch line portion 4222 are substantially the same. However, the relative relationship between the width of the main line portion 4221 and the width of the branch line portion 4222 is not particularly limited to the above-described relationship. For example, the width of the main line portion 4221 may be larger than the width of the branch line portion 4222, or the width of the main line portion 4221 may be smaller than the width of the branch line portion 4222.

In the case where the second end portion 432a is projected along the second direction, the branch portion 4224 is arranged so as to correspond to the portion where the second end portion 432a is projected on the first linear portion 422C. In this case, the second portion 422c of the first linear portion 422C is configured with the main line portion 4221, and the first portion $422b_1$ of the first linear portion 422C is configured with a plurality of branch line portions 4222 and a plurality of slit portions 4223.

In this embodiment, since the first portion $422b_1$ is configured with the plurality of branch line portions 4222 and the plurality of slit portions 4223, the relationship between the width $W_{31}$ of the first linear portion 422C in the first portion $422b_1$ and the width $W_{32}$ of the first linear portion 422C in the second portion 422c satisfies the following Formula (22).

$$W_{31} > W_{32} \ldots (22)$$

In addition, since the first portion 422bi is configured with the plurality of branch line portions 4222 and the plurality of slit portions 4223, the relationship between the opening ratio $A_{31}$ of the first linear portion 422C in the first portion $422b_1$ and the opening ratio $A_{32}$ of the first linear portion 422C in the second portion satisfies the following Formula (23).

$$A_{31} > A_{32} \ldots (23)$$

Even in the case where the above Formula (23) is satisfied, the electrical resistance of the first portion $422b_1$ of the first linear portion 422B is smaller than the electrical resistance of the second portion 422c.

The first wiring body 3C according to this embodiment has the following effects.

In this embodiment, the slit portion is formed between the branch line portions 4222 in the first portion $422b_1$, and thus, without changing the shapes of the first thin lines 423a and 423b constituting the first lead wire 42C, it is possible to set the width of the first portion $422b_1$ to be larger than the width of the second portion 422c, and it is possible to set the opening ratio $A_{31}$ of the first linear portion 422C in the first portion $422b_1$ to be larger than the opening ratio $A_{32}$. Therefore, similarly to the above-described embodiment, it is possible to achieve compatibility of suppression of the variation in responsiveness among the plurality of electrodes 411 and 412 and suppression of the deterioration in bendability of the first lead wire 42C.

In addition, in this embodiment, the first portion $422b_1$ includes the plurality of branch line portions 4222, and thus, even if one branch line portion 4222 is disconnected, it is possible to prevent the first lead wire 42C from being in a disconnected state.

In addition, this embodiment, since the shapes of the first thin lines 423a and 423b constituting the first lead wire 42C are not changed between the first and second portions 422b and 422c, in the process of manufacturing the first wiring body 3C, it is possible to stabilize the shape of the first lead wire 42C.

<Fourth Embodiment

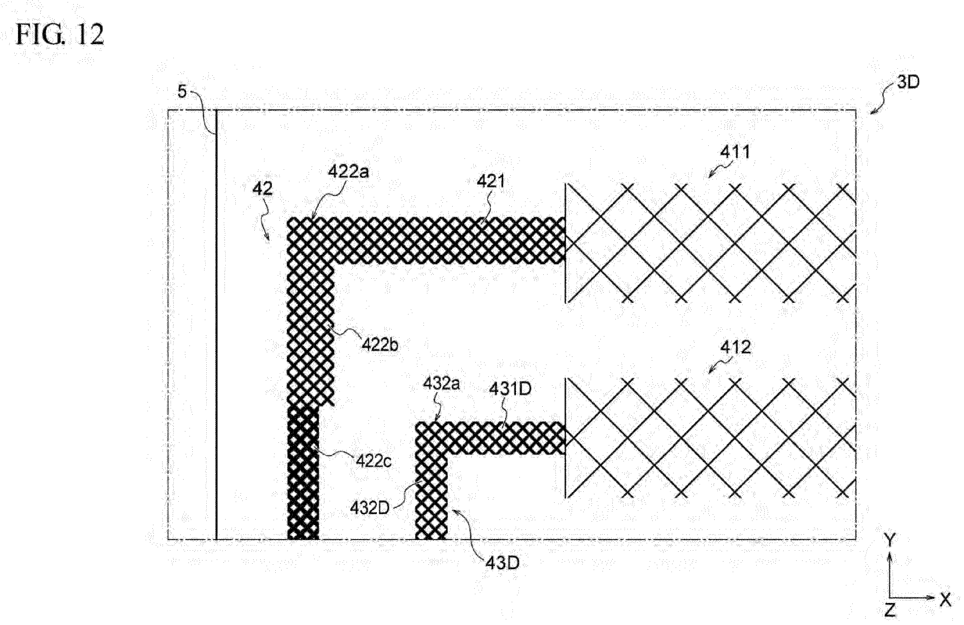

Fig. 12 is a plan view illustrating a first wiring body according to a fourth embodiment of the invention, and is a partially enlarged view corresponding to the Portion III of Fig. 1.

In the first wiring body 3D according to this embodiment, the configuration of the second lead wire 43D is different from that of the second lead wire 43 of the first embodiment, but the other configurations are the same as those of the first embodiment. Hereinafter, only the differences of the second lead wire 43D in the fourth embodiment from those of the first embodiment will be described, the same configurations as those of the first embodiment are denoted by the same reference numerals, and the description thereof will be omitted.

In this embodiment, as illustrated in Fig. 12, in the second direction, the width of the second thin lines 433a and 433b constituting the second linear portion 432D in the portion adjacent to the second portion 422c is smaller than the width of the first thin lines 423a and 423b constituting the second portion 422c. In addition, in the second direction, the second linear portion 432D in the portion adjacent to the second portion 422c denotes a portion of the second linear portion 432D that overlaps the projected second portion 422c when the second portion 422c is projected along the second direction.

In this embodiment, the relationship between the opening ratio $A_{42}$ of the first linear portion 422 in the second portion 422c and the opening ratio $A_{43}$ of the

second linear portion 432D in the portion adjacent to the second portion 422c in the second direction is set so as to satisfy the following Formula (24).

$$A_{42} > A_{43} \ldots (24)$$

In addition, in order to satisfy the above Formula (24), similarly to the above-described embodiment, the pitch of the second thin lines 433a and 433b constituting the second linear portion 432D may be set to be larger than the pitch of the first thin lines 423a and 423b constituting the first linear portion 422 in the second portion 422c.

The first wiring body 3D according to this embodiment has the following effects.

The first wiring body 3D in this embodiment can also obtain the same functions and effects as those of the first wiring body 3 described in the first embodiment.

In addition, in this embodiment, the above Formula (24) is set so as to be satisfied, and thus, the variation in electrical resistance between the first lead wire 42 and the second lead wire 43D is further reduced, so that it is possible to further suppress the variation in responsiveness among the plurality of electrodes 411 and 412.

In the case where the first wiring body has a plurality of lead wires, the opening ratios of the plurality of lead wires are different from each other, and thus, the opening ratio is formed so that the opening ratio is decreased as the linear portion of the lead wire becomes longer. Therefore, it is possible to further suppress the variation in responsiveness among a plurality of electrodes.

The above-described embodiments are described for the better understanding of the invention but not described for limiting the invention. Therefore, each element disclosed in the above-described embodiment includes all design changes and equivalents belonging to the technical scope of the invention.

For example, from the viewpoint of reducing the electrical resistance of the first lead wire 42, the heights of the first thin lines 423a and 423b constituting the first portion 422b and the heights of the first thin lines 423a and 423b constituting the second portion 422c are set to be different, and thus, the relationship between the density $D_1$ of the first linear portion 422C in the first portion 422b and the density $D_2$ of the first linear portion 422C in the second portion 422c may be set so as to satisfy the following Formula (25).

$$D_1 > D_2 \ldots (25)$$

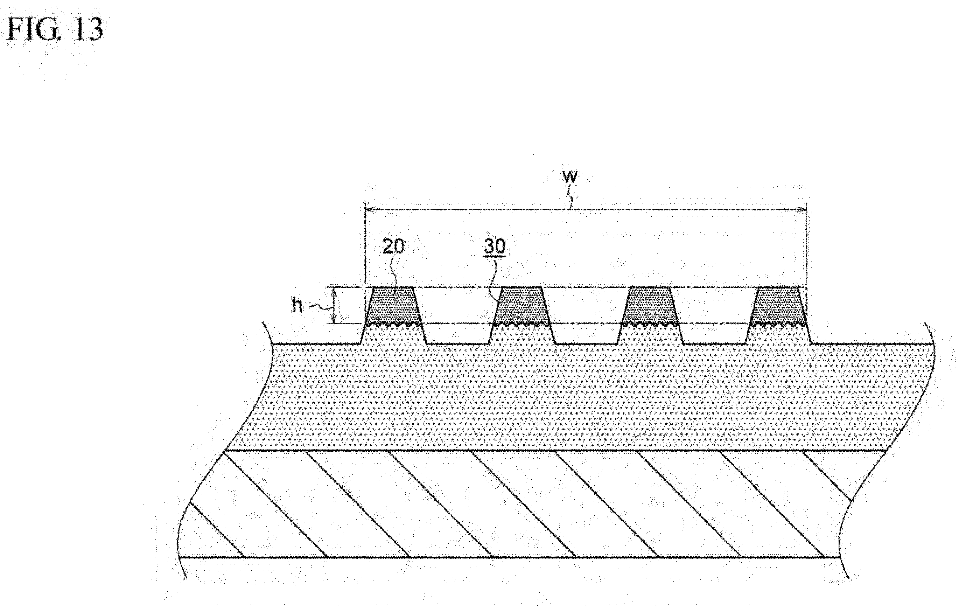

The "density of the linear portion" denotes a value expressed by the following Formula (26) (refer to Fig. 13).

$$(\text{Density}) = S/(h \times w) \ldots (26)$$

Herein, in the above Formula (26), h is the height of the linear portion in the cross section along the second direction, w is the width of the linear portion in the cross section along the second direction, and S is the cross-sectional area of the linear portion in the cross section along the second direction.

The "cross-sectional area of the linear portion" denotes the area of the cross section of the linear portion in the second direction. In this case, the cross-sectional area of the linear portion includes the cross-sectional area of the conductor portion and does not include the cross-sectional area of the nonconductive portion. In the case of determining the magnitude relationship of the cross-sectional areas of the linear portions, the phrase "the cross-sectional area of one linear portion is larger than the cross-sectional area of the other linear portion" denotes that one linear portion includes a portion having a cross-sectional area larger than a maximum value of the cross-sectional areas of the other linear portions in an arbitrary cross section of the one linear portion.

In addition, for example, the lead wire is configured by combining the relative relationship between the widths in the linear portions described in the first and second embodiments and the relative relationship of the density in the linear portion described in the third embodiment.

In addition, in each of the above-described embodiments, the lead wire is configured so that the openings are partially formed, but not particularly limited thereto, and the lead wire may be formed in a solid pattern. Even in such a case, the invention can be applied.

In addition, in the second embodiment, the width of the first linear portion 422B is changed at the connection portion of the first and second portions 422b and 422c in the first linear portion 422B, but not particularly limited thereto. The first portion 422b may be connected to the third portion 422d while the width of the first linear portion 422B in the first portion 422b is maintained. That is, in the first linear portion, it is unnecessary to change the width of the first linear portion in all of the connection portions between the respective portions.

In addition, the number of electrodes constituting the wiring body is not particularly limited but can be arbitrarily set. In this case, the number of lead wires and the number of terminals constituting the wiring body are set according to the number of electrodes. In the plurality of lead wires, the invention can be applied in relation to arbitrary two lead wires or arbitrary three lead wires.

In addition, in the case of setting a plurality of lead wires such that the widths of the adjacent linear portions are substantially the same, the width of the linear portion in each portion can be set based on the following Formula (27).

$$W = (N_1/N_2) \times W_{min} \quad \dots \text{(27)}$$

Herein, in the above Formula (27), W is a width of a linear portion in a required portion, $N_1$ is the number of electrodes in the wiring body, $N_2$ is the number of linear portions parallel to the second direction in the region corresponding to the desired portion, and $W_{min}$ is a width of a linear portion in the region where the linear portions of the lead wires, of which the number corresponds to the number of the electrodes, are adjacent to each other. In addition, $W_{min}$ is arbitrarily set to be such a width that, in a region where linear portions adjacent to each other are most likely to be short-circuited, the linear portions are not short-circuited, and for example, $W_{min}$ is 30 μm.

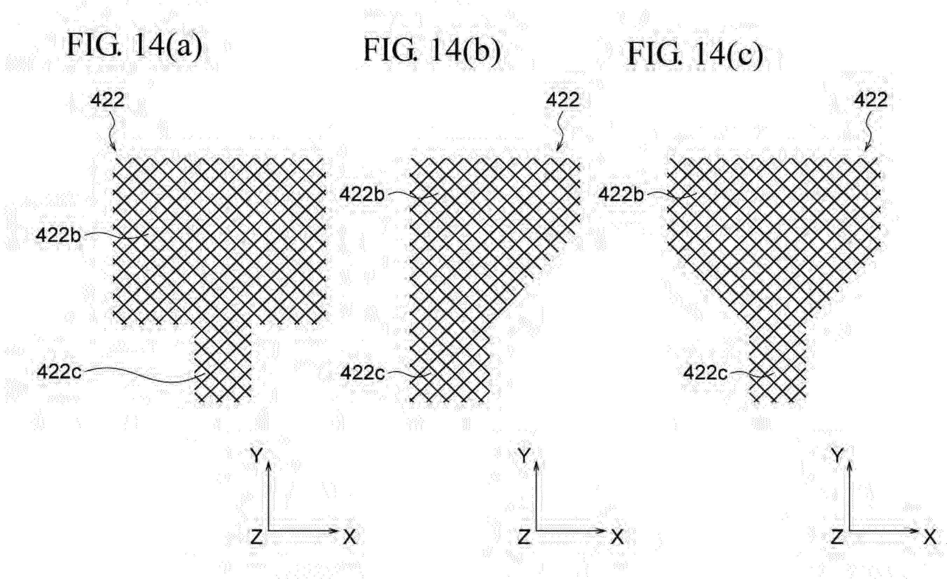

In addition, the shape of the connection portion between the portions having different widths in the linear portion is not particularly limited to the shape described in the first embodiment. Hereinafter, the shapes of the connection portions will be described with reference to Figs. 14(a) to 14(c), exemplifying the first portion 422b and the second portion 422c in the first embodiment. Figs. 14(a) to 14(c) are plan views illustrating modified examples of the connection portions between respective portions in a linear portion according to one embodiment of the invention.

For example, as illustrated in Fig. 14(a), in plan view, the center of the first portion 422b and the center of the second portion 422c may be aligned and connected to each other. In this case, in plan view, step differences are formed on the side portions on both sides of the first linear portion 422 at the connection portion of the first and second portions 422b and 422c of the first linear portion 422.

In addition, in plan view, the width of the first linear portion 422 in the first portion 422b may be formed so as to be gradually decreased toward the connection portion of the first and second portions 422b and 422c. For example, as illustrated in Fig. 14(b), in plan view, the first and second portions 422b and 422c may be connected so as to be substantially continuous in the side portion on the -X side of the first linear portion 422, and on the other hand, in the side portion on the +X side of the first linear portion 422, the width of the first linear portion 422 in the first portion 422b may be gradually changed.

In addition, as illustrated in Fig. 14(c), in plan view, the center of the first portion 422b and the center of the second portion 422c may aligned with each other and connected to each other, and in the side portions on the both sides of the first linear portion 422, the width of the first linear portion 422 in the first portion 422b may be set to be gradually changed.

In addition, for example, the base material 2 may be omitted from the touch sensor 1. In this case, for example, a wiring board may be configured in a form of providing a peeling sheet on the lower surface of the resin portion 5, peeling off the peeling sheet at the time of mounting, and bonding and mounting a mounting object (a film, a surface glass, a polarizing plate display, or the like). In addition, in this embodiment, the "resin portion 5" corresponds to an example of the "resin portion" in the invention and the "mounting object" corresponds to an example of the "support body" in the invention. In addition, a wiring body or a wiring board may be configured as a form in which a resin portion covering the first wiring body 3 is provided and the first wiring body is bonded to the above-mentioned mounting object.

In addition, the touch sensor according to the above-described embodiment is a projection type electro-capacitive touch panel sensor configured with two layers of conductors, but not particularly limited thereto. The invention can also be applied to a surface type (capacitance coupling type) electro-capacitive touch panel sensor configured with one layer of conductor.

In addition, as the conductive powder of the conductor portion 4, a mixture of a metal material and a carbon-based material may be used. In this case, for example, the carbon-based material may be arranged on the top surface side of the conductor portion 4, and the metal-based material may be arranged on the contact surface side. Alternatively, on the contrary, the metal-based material may be arranged on the top surface side of the conductor portion 4, and the carbon-based material may be arranged on the contact surface side.

Furthermore, in the above-described embodiment, the wiring body or the wiring board has been described to be used for a touch panel sensor, but not particularly limited thereto. For example, by flowing a current through the wiring body to generate heat by resistance heating or the like, the wiring body may be used as a heater. In this case, it is preferable that a carbon-based material having a relatively high electrical resistance is used as the conductive powder of the conductor portion 4. In addition, the wiring body may be used as an electromagnetic shield by grounding a portion of the conductor portion of the wiring body. In addition, the wiring body may be used as an antenna. In this case, the mounting object on which the wiring body is mounted corresponds to an example of the "support body" in the invention.

EXPLANATIONS OF LETTERS OR NUMERALS

1, 1B: touch sensor
2: base material
3, 3B, 3C, 3D: first wiring body
4, 4B: conductor portion
411 to 413: first to third electrodes
42, 42B, 42C: first lead wire
421, 421C: first connection portion
422, 422B, 422C: first linear portion
4221: main line portion
4222: branch line portion

4223: slit portion
4224: branch portion
422a: first end portion
422b, $422b_1$: first portion
422c: second portion
422d: third portion
423a, 423b: first thin line
424: contact surface
425: top surface
426: side surface
427, 427B: opening
43, 43B, 43D: second lead wire
431, 431D: second connection portion
432, 432B, 432D: second linear portion
432a: second end portion
432b: fourth portion
432c: fifth portion
433a, 433b: second thin line
437: opening
44: third lead wire
441: third connection portion
442: third linear portion
442a: third end portion
443a, 443b: third thin line
447: opening
451 to 453: first to third terminals
5: resin portion
51: flat portion
511: upper surface
52: protrusion portion
521: contact surface
522: side surface
6: second wiring body
7: conductor portion
71: electrode
72: lead wire
73: terminal
8: resin portion
11: intaglio plate
111: concave portion
12: conductive material
13: resin material

**Claims**

1. A wiring body comprising:

   a first lead wire that is connected to a first electrode; and
   a second lead wire that is connected to a second electrode,
   wherein the first lead wire includes:

      a first connection portion that is connected to the first electrode; and
      a first linear portion that has a first end portion connected to the first connection portion and that is bent from the first connection portion and extends in a first direction,
   wherein the second lead wire includes:

      a second connection portion that is connected to the second electrode; and
      a second linear portion that has a second end portion connected to the second connection portion and that is bent from the second connection portion and extends adjacent to the first linear portion,
   wherein the first linear portion includes:

      a first portion that is located on a side of the first end portion with respect to the second end portion in the first direction; and
      a second portion that is located on a side opposite to the first end portion with respect to the second end portion in the first direction, and
      wherein the following Formulas (1) and (2) are satisfied,

$$W_1 > W_2 \ \ldots \ (1)$$

$$A_1 > A_2 \ \ldots \ (2)$$

   herein, in the above Formula (1), $W_1$ is a width of the first linear portion in the first portion, and $W_2$ is a width of the first linear portion in the second portion, and in the above Formula (2), $A_1$ is an opening ratio of the first linear portion in the first portion, and $A_2$ is an opening ratio of the first linear portion in the second portion.

2. The wiring body according to claim 1, wherein the following Formula (3) is satisfied.

$$1.1 \leq A_1/A_2 \leq 1.8 \ \ldots \ (3)$$

3. The wiring body according to claim 1 or 2, wherein the opening ratio of the first linear portion is 40% or less.

4. The wiring body according to any one of claims 1 to 3, wherein the first linear portion includes:

   a main line portion;
   at least two branch line portions that are connected to the main line portion;
a slit portion that is interposed between the adjacent branch line portions; and
a branch portion where the main line portion is branched into the branch line portions,
wherein the branch portion is arranged corresponding to the second end portion, and
wherein the second portion includes the at least two branch line portions and the slit portion.

5. The wiring body according to any one of claims 1 to 4, wherein the following Formula (4) is satisfied,

$$A_2 > A_3 \ \ldots \ (4)$$

herein, in the above Formula (4), $A_3$ is an opening ratio of the second linear portion in a portion adjacent to the second portion in a second direction perpendicular to the first direction.

6. The wiring body according to any one of claims 1 to 5, wherein the first lead wire is configured so as to be partially provided with a opening, and
wherein the second lead wire is also configured so as to be partially provided with a opening.

7. The wiring body according to any one of claims 1 to 6, wherein the wiring body satisfies the following Formula (5),

$$D_1 > D_2 \ \ldots \ (5)$$

herein, in the Formula (5), $D_1$ is a density of the first linear portion in the first portion, and $D_2$ is a density of the first linear portion in the second portion.

8. The wiring body according to any one of claims 1 to 7, further comprising a third lead wire that is connected to a third electrode,
wherein the third lead wire includes:

a third connection portion that is connected to the third electrode; and
a third linear portion that has a third end portion connected to the third connection portion and that is bent from the third connection portion and extends adjacent to the first linear portion,
wherein the first linear portion further includes a third portion that is located on a side opposite to the first electrode with respect to the third end portion in the first direction, and
wherein the following Formulas (6) and (7) are satisfied,

$$W_2 > W_3 \ \ldots \ (6)$$

$$A_2 > A_4 \ \ldots \ (7)$$

herein, in the Formula (6), $W_3$ is a width of the first linear portion in the third portion, and in the Formula (7), $A_4$ is an opening ratio of the first linear portion in the third portion.

9. The wiring body according to any one of claims 1 to 7, further comprising a third lead wire that is connected to a third electrode,
wherein the third lead wire includes:

a third connection portion that is connected to the third electrode; and
a third linear portion that has a third end portion connected to the third connection portion and that is bent from the third connection portion and extends adjacent to the first linear portion,
wherein the second linear portion includes:

a fourth portion that is located on a side of the second electrode with respect to the third end portion in the first direction; and
a fifth portion that is located on a side opposite to the second electrode with respect to the third end portion in the first direction, and
wherein the following Formulas (8) and (9) are satisfied,

$$W_4 > W_5 \ \ldots \ (8)$$

$$A_5 > A_6 \ \ldots \ (9)$$

herein, in the Formula (8), $W_4$ is a width of the second linear portion in the fourth portion, and $W_5$ is a width of the second linear portion in the fifth portion, and in the Formula (9), $A_5$ is an opening ratio of the second linear portion in the fourth portion, and $A_6$ is an opening ratio of the second linear portion in the fifth portion.

10. The wiring body according to any one of claims 1 to 9, wherein the following Formulas (10) and (11) are satisfied,

$$W_6 > W_7 \ \ldots \ (10)$$

$$A_7 > A_8 \ \ldots (11)$$

herein, in the above Formula (10), $W_6$ is a width of the linear portion of the first connection portion, and $W_7$ is a width of the second connection portion, and in the Formula (11), $A_7$ is an opening ratio of the first connection portion, and $A_8$ is an opening ratio of the second connection portion.

11. A wiring board comprising:

the wiring body according to any one of claims 1 to 10; and
a support body that supports the wiring body.

12. A touch sensor comprising the wiring board according to claim 11.

FIG. 1

EP 3 396 500 A1

FIG. 2

FIG. 3

EP 3 396 500 A1

FIG. 4(a)

FIG. 4(b)

FIG. 5

FIG. 6

FIG. 7(a)

FIG. 7(b)

FIG. 7(c)

FIG. 7(d)

FIG. 7(e)

FIG. 8

EP 3 396 500 A1

FIG. 9

FIG. 10(a)

FIG. 10(b)

FIG. 10(c)

FIG. 11

FIG. 12

FIG. 13

FIG. 14(a)　　　　　FIG. 14(b)　　　　　FIG. 14(c)

422

422b

422c

422

422b

422c

422

422b

422c

Y
Z → X

Y
Z → X

Y
Z → X

EP 3 396 500 A1

**INTERNATIONAL SEARCH REPORT**

| International application No. |
|---|
| PCT/JP2016/088328 |

A. CLASSIFICATION OF SUBJECT MATTER
*G06F3/041*(2006.01)i, *G06F3/044*(2006.01)i

According to International Patent Classification (IPC) or to both national classification and IPC

B. FIELDS SEARCHED

Minimum documentation searched (classification system followed by classification symbols)
G06F3/041, G06F3/044

Documentation searched other than minimum documentation to the extent that such documents are included in the fields searched
Jitsuyo Shinan Koho        1922-1996   Jitsuyo Shinan Toroku Koho   1996-2017
Kokai Jitsuyo Shinan Koho  1971-2017   Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2014-110060 A (LG Innotek Co., Ltd.), 12 June 2014 (12.06.2014), fig. 13 & US 2014/0152917 A1 fig. 13 & EP 2738653 A2          & KR 10-2014-0071026 A & CN 103853380 A          & TW 201428576 A | 1-12 |
| Y | JP 3191884 U (Shenzhen O-film Tech Co., Ltd.), 17 July 2014 (17.07.2014), fig. 6 (Family: none) | 1-12 |

☒ Further documents are listed in the continuation of Box C.          ☐ See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 07 February 2017 (07.02.17) | Date of mailing of the international search report 21 February 2017 (21.02.17) |
|---|---|
| Name and mailing address of the ISA/ Japan Patent Office 3-4-3,Kasumigaseki,Chiyoda-ku, Tokyo 100-8915,Japan | Authorized officer

Telephone No. |

Form PCT/ISA/210 (second sheet) (January 2015)

**INTERNATIONAL SEARCH REPORT**

International application No.

PCT/JP2016/088328

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2012-053924 A  (Alps Electric Co., Ltd.),<br>15 March 2012 (15.03.2012),<br>paragraphs [0002] to [0014]<br>& WO 2012/011390 A1<br>paragraphs [0002] to [0014]<br>& KR 10-2012-0116464 A  & CN 102844730 A | 1-12 |
| Y | JP 2014-207283 A  (Alps Electric Co., Ltd.),<br>30 October 2014 (30.10.2014),<br>paragraph [0013]; fig. 6, 7<br>(Family: none) | 4-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015253194 A
- JP 2014519129 A
- JP 2014110060 A
- JP 3191884 U
- JP 2012053924 A